# FASCICULE DE BREVET EUROPEEN

(11) **EP 2 401 539 B1**
(45) Date de publication et mention de la délivrance du brevet: **10.08.2016**
(21) Numéro de dépôt: 10708608.4
(22) Date de dépôt: 24.02.2010
(51) Int. Cl.: F16L 13/00, F16L 49/00, C04B 37/02, C04B 41/50, C04B 41/52, C04B 41/87, C04B 41/89, C10G 9/00, C10G 9/16, F23G 5/44, F28F 9/18, F28F 21/04

(54) **DISPOSITIF D'ASSEMBLAGE**
VERBINDUNGSVORRICHTUNG
JOINING DEVICE

(30) Priorité: 24.02.2009 FR 0951174
(43) Date de publication de la demande: 04.01.2012
(73) Titulaire: Saint-Gobain Centre De Recherches Et D'etudes Europeen, 92400 Courbevoie (FR)
(72) Inventeur: HIS, Christian, F-84300 Cavaillon (FR); VILLERMAUX, Franceline, F-84000 Avignon (FR); BELLY, Guillaume, F-84800 L'Isle-Sur-La-Sorge (FR)
(74) Mandataire: Nony
(86) Numéro de dépôt international: PCT/IB2010/050809
(87) Numéro de publication internationale: WO 2010/097763

(56) Documents cités:
- EP-A1- 1 795 794
- EP-A2- 1 829 847
- DE-A1-102005 054 093
- FR-A1- 2 562 983
- FR-A1- 2 645 941
- US-A- 4 624 484
- US-A1- 2009 004 369

## Description

### Domaine technique

L'invention se rapporte notamment à un appareil choisi parmi un four, une chaudière, un surchauffeur, un générateur de vapeur, un réacteur chimique et un échangeur thermique, notamment destiné à la production d'éthylène. En particulier, elle concerne des moyens pour assurer ou améliorer une connexion bout à bout entre un tube en céramique (en particulier, en carbure de silicium) et un tube métallique, avec ou sans contact direct entre les deux tubes.

### Etat de la technique

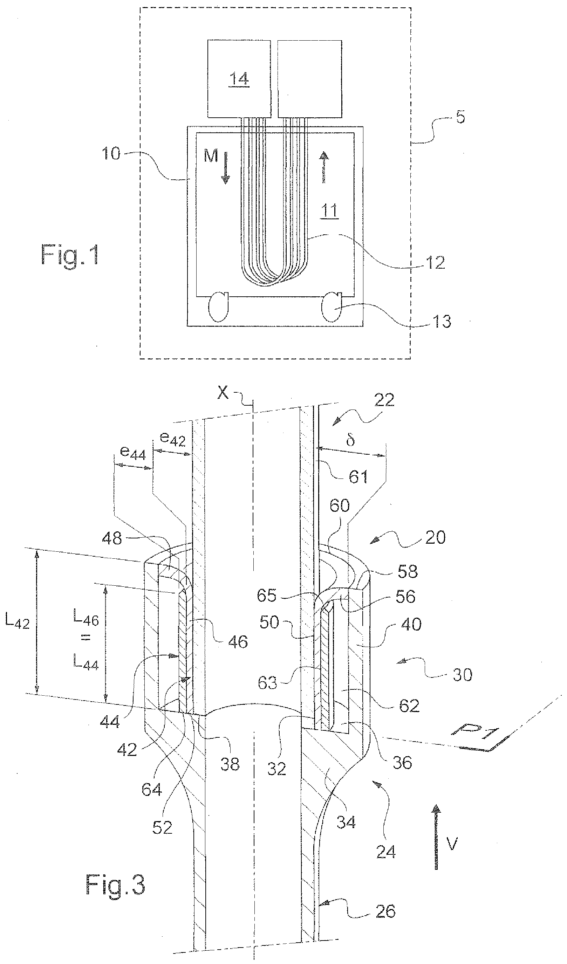

La production d'éthylène résulte classiquement d'un vapocraquage, en anglais « steam cracking », à partir d'éthane ou de naphta. A cet effet, une unité de production d'éthylène 5, telle que représentée schématiquement sur la figure 1, comporte classiquement un four 10 comprenant une enceinte 11 traversé par un faisceau de tubes 12 et chauffée par au moins un brûleur 13.

Les tubes 12, de section circulaire, présentent un diamètre extérieur compris entre 50 et 250 mm et une paroi d'une épaisseur comprise entre 5 et 25 mm. Ces tubes, repliés en épingle, présentent une longueur à l'intérieur de l'enceinte du four de plusieurs mètres. Ils sont constitués en alliage de fer, de nickel et de chrome.

Pour produire de l'éthylène, des moyens d'alimentation 14 alimentent une extrémité amont des tubes 12 avec un mélange réactif M d'hydrocarbures et de vapeur d'eau, une température supérieure à 1000°C étant maintenue dans l'enceinte 11. Le débit de ce mélange est adapté de manière à ce que le mélange réactif M puisse atteindre une température supérieure à 750 °C et réagir pour conduire à la production d'éthylène.

La production d'éthylène conduit à un dépôt de coke sur les surfaces intérieures des tubes 12, faisant chuter la productivité.

En particulier, il a été découvert que le nickel de l'alliage constituant les tubes catalyse la production de coke. Les chercheurs ont donc envisagé de remplacer les tubes métalliques par des tubes exempts de nickel, en particulier des tubes céramiques. Les tubes céramiques doivent pouvoir être connectés au reste de l'installation, et en particulier à des tubes métalliques utilisés pour amener le mélange réactif ou pour évacuer les produits de la réaction. Des recherches ont donc été conduites pour trouver des dispositifs de liaison adaptés, en particulier capables de résister aux cycles thermiques, typiquement d'une amplitude de plus de 700°C, qui résultent des arrêts des fours.

En particulier, les tubes céramiques et les tubes métalliques présentent des coefficients de dilatation très différents, typiquement d'environ 4.10⁻⁶K⁻¹ et d'environ 18.10⁻⁶K⁻¹, respectivement. Dans les applications visées, les connections testées conduisent à des pertes d'étanchéité, voire à une désolidarisation des tubes.

Par exemple, FR 2 645 941 décrit un dispositif de liaison entre un support métallique et un élément tubulaire céramique dans lequel une bague est fixée sur le support et entoure le tube céramique avec un jeu fonctionnel. L'étanchéité est obtenue par un joint de coke résultant du fonctionnement de l'unité de production. Ce jeu fonctionnel conduit cependant, au démarrage de l'unité de production, à des fuites d'hydrocarbures.

En outre, la liaison n'est pas mécaniquement fiable, notamment à température ambiante. Il n'est donc pas adapté à un environnement tel que celui d'un four de production d'éthylène. De plus, le décokage ne peut s'effectuer à la vapeur d'eau, mais doit nécessairement résulter d'une abrasion mécanique.

Enfin, le dispositif de liaison décrit dans FR 2 645 941 ne peut être appliqué que dans des installations générant du coke.

### Résumé de l'invention

Il existe donc un besoin pour un nouveau dispositif de liaison, notamment adapté à la connexion d'un tube céramique avec un tube métallique dans un environnement tel que celui d'un four de production d'éthylène, mais sans y être limité.

Un objectif de l'invention est donc de répondre, au moins partiellement, à ce besoin.

### Premier aspect de la demande

Selon un premier aspect de la demande et selon, l'invention, on atteint ce but au moyen d'un dispositif comportant une première pièce frettée au moyen d'une première frette, la première frette étant elle-même frettée au moyen d'une deuxième frette présentant un coefficient de dilatation inférieur au coefficient de dilatation de la première frette, au moins entre 20°C et 1000°C.

A température ambiante, les frettes assurent une liaison mécanique fiable et une bonne étanchéité. Lors d'une élévation de la température, la deuxième frette se dilate moins que la première frette. Elle exerce ainsi sur cette dernière une force de compression évitant sa désolidarisation de la première pièce ou une perte d'étanchéité entre la première pièce et la première frette.

Comme on le verra plus en détail dans la suite de la description, lorsque la première pièce est un tube céramique, il devient ainsi possible, en fixant un tube métallique sur la première frette, d'obtenir une liaison particulièrement fiable mécaniquement entre le tube céramique et le tube métallique. Cette liaison peut avantageusement être suffisamment étanche, notamment pour les applications visées, non seulement à température ambiante, mais aussi sur une plage de températures de plusieurs centaines de degrés, typiquement de plus de 700°C, de plus de 800°C, voire de plus de 900°C.

Un dispositif selon l'invention peut encore comporter une ou plusieurs des caractéristiques optionnelles suivantes :
- La première pièce est en un matériau présentant un coefficient de dilatation inférieur à 10.10⁻⁶ K⁻¹, inférieur à 8.10⁻⁶ K⁻¹, inférieur à 6.10⁻⁶ K⁻¹, voire inférieur à 5.10⁻⁶ K⁻¹, entre 20°C et 1000°C.
- La première pièce est en un matériau présentant un module d'élasticité (MOE) supérieur à 150 GPa.
- La première pièce est en un matériau céramique, carbure, nitrure ou oxyde, capable de supporter des températures atteignant 1400°C, voire 1500°C.
- La première pièce comporte un matériau céramique ou vitrocéramique. Ce matériau peut en particulier être choisi parmi le carbure de silicium, l'alumine, la mullite, le nitrure de silicium, la zircone, la cordiérite, le titanate d'aluminium et leurs mélanges.
- La quantité massique de carbure de silicium dans le matériau de la première pièce est supérieure à 80%, de préférence supérieure à 90%. De préférence ledit matériau est constitué de carbure de silicium. Le carbure de silicium présente des propriétés particulièrement utiles dans l'application visée. En particulier, il permet de limiter la formation de coke et présente une conductivité thermique élevée autorisant un transfert efficace de la chaleur du four vers le mélange réactif circulant dans les tubes. Le rendement énergétique est ainsi supérieur à celui obtenu avec un tube métallique correspondant. Enfin, le carbure de silicium, dont la température maximale d'utilisation est supérieure à 2000°C, conserve ses propriétés mécaniques, même à très haute température. Avantageusement, il devient donc possible d'augmenter la température à l'intérieur du four et, simultanément, d'augmenter le débit du mélange de réactifs circulant dans les tubes. La productivité du four peut ainsi être considérablement augmentée.
- Le matériau de la première pièce présente une porosité totale inférieure à 5%, de préférence inférieure à 2%, voire inférieure à 1%. Avantageusement, la perméabilité de la première pièce en est réduite.
- La première frette comporte un métal. De préférence la première frette est constituée en un ou plusieurs métaux. Dans un mode de réalisation, elle comporte un métal ferreux.
- La première frette est en un matériau présentant un coefficient de dilatation inférieur à 25.10⁻⁶ K⁻¹, inférieur à 20.10⁻⁶ K⁻¹ et/ou supérieur à 10.10⁻⁶ K⁻¹, ou supérieur à 15.10⁻⁶ K⁻¹, entre 20°C et 1000°C.
- La première frette est en un matériau présentant une température de fusion supérieure à 1200°C. Avantageusement, la première frette peut être ainsi chauffée à très haute température pour être montée sur la première pièce et/ou lors de son utilisation.
- Le matériau de la première frette est choisi parmi les alliages à base de cobalt, comme le Stellit, les aciers austénitiques, ferritiques, ou les alliages à base de titane. Dans un mode de réalisation, le première frette ne comporte pas de cuivre et/ou ne comporte pas d'étain.
- La première frette est constituée en un unique matériau.
- La première frette présente la forme d'une bague ou d'un manchon dont la dilatation radiale n'est pas entravée. En particulier, la première frette n'est pas insérée dans une pièce qui entraverait son expansion radiale vers l'extérieur. Le montage de la première frette en est simplifié.
- Le rapport du coefficient de dilatation du matériau de la première frette sur le coefficient de dilatation du matériau de la première pièce, mesurés à une température entre 20°C et 1000°C, est supérieur à 2,5, supérieur à 3, supérieur à 4 et/ou inférieur à 6, voire inférieur à 5.
- La deuxième frette est en un matériau présentant un coefficient de dilatation inférieur à 15.10⁻⁶ K⁻¹, voire inférieur à 10.10⁻⁶ K⁻¹ et/ou supérieur à 4.10⁻⁶ K⁻¹, voire supérieur à 6.10⁻⁶ K⁻¹ entre 20°C et 1000°C. Le matériau de la deuxième frette peut en particulier présenter un coefficient de dilatation thermique de 8.10⁻⁶ K⁻¹ entre 20°C et 1000°C.
- La deuxième frette est en un matériau présentant une température de fusion supérieure à 1200°C. Avantageusement, la deuxième frette peut être ainsi chauffée à très haute température pour être montée sur la première frette, ce qui permet d'obtenir une liaison particulièrement serrée.
- Le rapport du coefficient de dilatation du matériau de la première frette sur le coefficient de dilatation du matériau de la deuxième frette, entre 20°C et 1000°C, est supérieur à 1,2, supérieur à 1,5, supérieur à 1,8 et/ou inférieur à 3,5, inférieur à 3, voire inférieur à 2,5.
- La deuxième frette est en un matériau présentant un module d'élasticité (module de Young) à 20°C inférieur à 110 GPa, de préférence inférieur à 100 GPa. Le matériau de la deuxième frette peut en particulier présenter un module d'élasticité (module de Young) de 90 GPa à 20°C.
- Le matériau de la deuxième frette présente une teneur massique en niobium et/ou en Dilver P1 supérieure à 80%, de préférence supérieure à 85% et/ou inférieure à 95%, de préférence inférieure à 93%. Avantageusement, la présence de niobium permet d'obtenir un comportement dilatométrique particulièrement bien adapté lorsque le dispositif est utilisé pour la production d'éthylène. Le Dilver P1 peut être avantageusement utilisé lorsque le dispositif selon l'invention n'est pas soumis à des températures supérieures à 600°C en service. Dans ces conditions de température, le niobium est de préférence totalement remplacé par le Dilver P1. La modification de la teneur en niobium et/ou en Dilver P1 permet également d'ajuster précisément le coefficient de dilatation thermique à l'application visée.
- Le matériau de la deuxième frette présente une teneur massique en hafnium, sous forme métallique, supérieure à 5%, de préférence supérieure à 8% et/ou inférieure à 15%, de préférence inférieure à 12%. Avantageusement, la présence d'hafnium améliore la résistance mécanique à chaud.
- Le matériau de la deuxième frette présente une teneur massique en titane, sous forme métallique, supérieure à 0,5%, de préférence supérieure à 0,8% et/ou inférieure à 1,5%, de préférence inférieure à 1,2%. Avantageusement, la présence de titane améliore la ductilité et la résistance à l'oxydation.
- Le matériau de la deuxième frette est constitué de niobium et/ou de Dilver P1, d'hafnium et de titane, le complément à 100% étant des impuretés représentant moins de 2%, de préférence moins de 1%, en pourcentages massiques.
- La deuxième frette est constituée en un unique matériau.
- La deuxième frette présente la forme d'une bague ou d'un manchon dont la dilatation radiale n'est pas entravée. En particulier, la deuxième frette n'est pas insérée dans une pièce qui entraverait son expansion radiale vers l'extérieur. Le montage de la deuxième frette en est simplifié.
- La première frette et/ou la deuxième frette s'étend sur une longueur supérieure à 40 mm et/ou inférieure à 150 mm.
- La première frette présente une épaisseur, de préférence sensiblement constante, supérieure à 1 mm, de préférence supérieure à 3 mm, de préférence encore supérieure à 3,5 mm et/ou inférieure à 5 mm et/ou la deuxième frette présente une épaisseur, de préférence sensiblement constante, supérieure à 3 mm, de préférence supérieure à 5 mm, de préférence supérieure à 8 mm, et/ou inférieure à 15 mm, de préférence inférieure à 13 mm. Ces longueurs et épaisseurs se sont avérées optimales pour assurer une bonne étanchéité de la liaison.
- Une deuxième pièce est fixée sur la première frette.
- La deuxième pièce est en un matériau présentant un coefficient de dilatation inférieur à 25.10⁻⁶ K⁻¹, inférieur à 20.10⁻⁶ K⁻¹ et/ou supérieur à 10.10⁻⁶ K⁻¹, ou supérieur à 15.10⁻⁶ K⁻¹, entre 20°C et 1000°C. Un dispositif selon l'invention est en particulier parfaitement adapté pour connecter des première et deuxième pièces présentant des coefficients de dilatation très différents.
- Le matériau de la deuxième pièce est métallique. En particulier, ce matériau peut être choisi parmi les alliages à base de cobalt, comme le Stellit, les aciers austénitiques, ferritiques, voire ferreux ou les alliages à base de titane.
- La deuxième pièce est en un matériau présentant un coefficient de dilatation et/ou une composition chimique sensiblement identique(s) à celui ou celle de la première frette.
- La deuxième pièce est soudée ou brasée sur la première frette. La mise en oeuvre d'une soudure ou d'une brasure permet avantageusement une fixation fiable, même à haute température. Elle est particulièrement bien adaptée lorsque les matériaux de la deuxième pièce et de la première frette sont de compositions proches, voire identiques.
- Les ouvertures de la première frette et/ou de la deuxième frette est (sont) cylindriques de section circulaire. Autrement dit, la première pièce présente extérieurement une partie cylindrique circulaire sur laquelle la première frette est montée et/ou la première frette présente extérieurement une partie cylindrique circulaire sur laquelle la deuxième frette est montée. Les première et deuxième frettes peuvent en particulier présenter la forme générale de bagues.
- L'intérieur de la première pièce et/ou de la deuxième pièce est plein, creux ou partiellement plein. Le volume intérieur creux peut être d'une forme quelconque.
- La première pièce et/ou, le cas échéant, la deuxième pièce sont choisis parmi un tube et une barre pleine.
- Le tube et/ou la barre présente(nt) une longueur supérieure à 1 m, de préférence supérieure à 3 m.
- La plus grande dimension extérieure transversale dudit tube ou de ladite barre (c'est-à-dire le diamètre extérieur dans le cas d'une section circulaire), en amont et/ou en aval du dispositif de liaison, est supérieure à 10 mm, de préférence supérieure à 20 mm, supérieure à 30 mm, supérieure à 40 mm et/ou inférieure à 150 mm, inférieure à 100 mm, inférieure à 75 mm.
- Dans une coupe transversale dudit tube, en amont ou en aval et/ou au niveau du dispositif de liaison, le contour de la surface intérieure est de forme identique ou différente du contour de la surface extérieure dudit tube. Par exemple la surface intérieure peut présenter des rainures ou des aspérités ou être polygonale, par exemple carrée, et la surface extérieure être circulaire.
- Dans une coupe transversale de la première frette, le contour de la surface intérieure de la première frette est de forme identique ou différente du contour de sa surface extérieure.
- Une troisième pièce est fixée sur ladite deuxième pièce.
- Le dispositif ne comporte ni vis, ni boulons. Ces pièces sont en effet susceptibles de se rompre sous l'effet d'une incrustation de coke dans leurs filets.
- La première pièce est un tube céramique ou une barre pleine céramique et/ou, le cas échéant, la deuxième pièce est un tube métallique ou une barre pleine métallique.
- Dans un mode de réalisation, les première et deuxième pièces sont des premier et deuxième tubes alignés axialement. De préférence, elles sont montées bout à bout, de préférence sans contact l'une avec l'autre.
- Dans un mode de réalisation, la première frette fait saillie de la première pièce, c'est-à-dire, dans le cas où la première pièce est un tube ou une barre, s'étend au-delà de l'extrémité axiale de la première pièce sur laquelle elle est montée, et la deuxième frette ne fait pas saillie de la première pièce, voire est montée affleurante sur la première pièce.
- Dans un mode de réalisation, lesdits premier et deuxième tubes présentent un même diamètre intérieur.
- De préférence, lesdits premier et deuxième tubes sont écartés axialement l'un de l'autre de moins de 5 mm, moins de 3 mm, ou moins de 1 mm.
- La première et/ou deuxième pièces sont des tubes qui s'étendent de préférence sur une longueur (selon l'axe du tube) supérieure à 10 cm, supérieure à 50 cm, voire supérieure à 1m au-delà de l'extrémité axiale de la première frette s'étendant dans ledit plan transversal.
- La première pièce est un tube céramique, s'étendant de préférence selon un axe sensiblement verticalement, et la deuxième pièce est un tube métallique. Le tube céramique peut en particulier présenter une longueur supérieure à 1 mètre, supérieure à 5 mètres, voire supérieure à 8 mètres. Le tube métallique peut en particulier présenter un axe rectiligne et être disposé coaxialement dans le prolongement du tube céramique. En variante, le tube métallique peut être coudé, voire être en forme de « U ». Dans un mode de réalisation, les deux branches du « U » sont connectées à des tubes céramiques, à chaque fois au moyen d'un dispositif de liaison selon l'invention.

La conformation des première et deuxième pièces peut être quelconque. Cependant, au niveau du dispositif de liaison, les dimensions de la deuxième pièce doivent permettre sa fixation sur la première frette, elle-même fixée à l'extérieur de la première pièce.

Dans un mode de réalisation dans lequel les première et deuxième pièces sont des tubes présentant, sur toute leur longueur, y compris au niveau du dispositif de liaison, un diamètre extérieur et une épaisseur de paroi sensiblement constants, cette exigence conduit donc à une réduction de la section de passage à la transition entre la deuxième pièce et la première pièce.

C'est pourquoi, de préférence, les première et deuxième pièces sont des tubes (ou des barres) présentant, sur toute leur longueur, un diamètre extérieur constant, sauf, pour ce qui concerne la deuxième pièce, au niveau du dispositif de liaison. Dans ce mode de réalisation, tel que celui représenté sur la figure 3, la deuxième pièce est ainsi un tube présentant une extrémité axiale élargie, par exemple sous la forme d'une jupe cylindrique, dont les dimensions sont adaptées pour qu'elle puisse servir à la fixation sur la première frette.

L'extrémité axiale élargie peut être venue de matière avec le reste du tube. La réalisation pratique d'une deuxième pièce présentant une telle conformation peut cependant être délicate. Dans un mode de réalisation, ladite extrémité axiale élargie est donc rapportée sur un tube conventionnel (de diamètre constant sur toute sa longueur) sous la forme d'une pièce de jonction. Par exemple, une jupe présentant un diamètre intérieur supérieur au diamètre intérieur d'un tel tube peut être soudée à une extrémité dudit tube. Avantageusement, la section de passage peut ainsi être maintenue constante quelle que soit la position axiale considérée (en amont, en aval ou au niveau du dispositif de liaison). L'utilisation d'une pièce de jonction est particulièrement efficace lorsque la deuxième pièce est une barre pleine.

Les caractéristiques ci-dessus ainsi que celles des autres aspects de la demande qui sont décrits ci-après sont avantageusement incorporées ensemble dans un même dispositif pour obtenir une liaison optimale, bien que dans certains cas, les avantages qui résultent de ces caractéristiques puissent être mis à profit séparément des autres, dans des dispositifs différents.

La demande concerne aussi un procédé d'assemblage d'une première pièce en un matériau présentant un premier coefficient de dilatation et d'une deuxième pièce en un matériau présentant un deuxième coefficient de dilatation supérieur audit premier coefficient de dilatation, ledit procédé comportant les étapes suivantes :
1) frettage d'une première frette sur la première pièce ;
2) frettage d'une deuxième frette sur la première frette, ladite deuxième frette étant constituée en un matériau présentant un coefficient de dilatation inférieur au coefficient de dilatation de la première frette ;
3) indépendamment de l'étape 1) ou de l'étape 2), de préférence après l'étape 2), fixation de la deuxième pièce sur la première frette.
De préférence, la première pièce, la deuxième pièce, la première frette et la deuxième frette sont choisies de manière à obtenir, à l'issue de l'étape 3), un dispositif conforme à l'invention, selon l'un quelconque de ses aspects.

La demande concerne également encore un procédé pour adapter une frette à un environnement présentant une variabilité thermique déterminée, par exemple d'une amplitude supérieure à 200°C, supérieure à 400°C, supérieure à 700°C, voire supérieure à 900°C, ledit procédé consistant à modifier la composition de ladite frette, en particulier en modifiant la teneur en niobium et/ou en Dilver P1.

La frette peut en particulier présenter une ou plusieurs caractéristiques, éventuellement optionnelles, d'une deuxième frette selon l'un quelconque des aspects de la demande. Le matériau de la frette peut notamment présenter une teneur massique en niobium et/ou en Dilver P1 supérieure à 80%, de préférence supérieure à 85% et/ou inférieure à 95%, de préférence inférieure à 93%.

### Deuxième aspect de la demande

Le montage d'une première frette sur une première pièce consiste classiquement à aligner axialement la première frette chauffée à haute température et une partie cylindrique correspondante de la première pièce, puis à déplacer axialement la première frette par rapport à la première pièce afin d'emmancher la première frette sur la première pièce. L'alignement axial de la première pièce et de la première frette doit être suffisamment précis et la première pièce et la première frette doivent être dimensionnées avec une tolérance la plus réduite possible.

La proximité physique de la première frette et de la première pièce lors du montage peut conduire à l'apparition de chocs thermiques. En particulier, le faible jeu peut conduire à des transferts thermiques rapides, notamment en cas de contact entre la première frette et la première pièce, et en particulier lorsque la première pièce présente une conductivité thermique élevée, par exemple parce qu'elle est en carbure de silicium.

Ces transferts thermiques peuvent dégrader la première pièce. De plus, ils peuvent conduire à une dilatation de la première pièce et à une contraction de la première frette menant à un blocage en position de la première frette avant qu'elle ait pu atteindre la position définitive souhaitée.

Il existe donc un besoin pour un procédé de frettage permettant de résoudre, au moins partiellement ce problème.

Un but de la demande est de répondre, au moins partiellement à ce besoin. Selon un deuxième aspect de la demande, on atteint ce but en revêtant la première pièce et/ou la première frette d'un revêtement en un matériau présentant une conductivité thermique inférieure à celle du matériau de la première pièce.

Ce revêtement limite ainsi les échanges thermiques entre la première pièce et la première frette et réduit ainsi le risque de choc thermique et de blocage en position intermédiaire, notamment en cas de contact pendant le montage.

De préférence, le matériau de revêtement présente une conductivité thermique inférieure à 10 W.m.°C et, de préférence, le rapport entre la conductivité thermique du matériau de la première pièce et la conductivité thermique du matériau de revêtement est supérieur à 10. Le matériau de revêtement est de préférence un matériau réfractaire. En particulier, le matériau de revêtement peut être choisi parmi la zircone, une zircone dopée, la cordiérite, l'alumine, la mullite, le titanate d'aluminium, l'oxyde d'yttrium, l'oxyde de magnésium, l'oxyde d'hafnium et un mélange de ces matériaux. Un revêtement comportant plus de 80% en masse de zircone s'est avéré particulièrement performant.

Le matériau de revêtement pourrait également être en métal.

La première pièce et/ou la première frette peuvent être ou ne pas être une première pièce et/ou une première frette d'un dispositif selon un ou plusieurs autres aspects de la demande.

### Troisième, quatrième et cinquième aspects de la demande

Les inventeurs ont constaté que lorsqu'une première frette est montée sur la première pièce, de la matière peut migrer depuis la première frette vers la première pièce. En particulier, ils ont constaté que du nickel de la première frette peut migrer vers le carbure de silicium de la première pièce, conduisant à des zones de contraintes dans la première pièce, pouvant mener à des ruptures lors des changements de température.

Il existe donc un besoin pour un dispositif comportant une première frette montée sur une première pièce et présentant une résistance mécanique améliorée.

Par ailleurs, lorsque la première pièce est en un matériau à base d'un composé de silicium (c'est-à-dire comporte plus de 50% massique dudit composé de silicium), et en particulier lorsque la première pièce est en carbure de silicium, un revêtement en un oxyde céramique peut être difficile à faire adhérer à la surface de la première pièce.

Cette adhésion est particulièrement délicate lorsque le matériau de la première pièce présente une porosité totale inférieure à 5%.

Il existe donc un besoin pour un procédé pour revêtir un substrat à base d'un composé de silicium au moyen d'un revêtement comportant au moins un oxyde céramique, ce procédé permettant de fixer, de manière fiable et durable, ledit revêtement.

Un objectif de la demande est de fournir une solution technique pour résoudre, au moins partiellement, les problèmes susmentionnés.

Selon un troisième aspect de la demande, on atteint ce but au moyen d'un procédé pour revêtir un substrat à base d'un composé de silicium au moyen d'un revêtement comportant au moins un oxyde céramique, ledit procédé comportant les étapes successives suivantes :
a1) application sur ledit substrat, de préférence à température ambiante, de particules comportant, de préférence constituées par, ledit au moins un oxyde céramique ;
b1) traitement thermique dudit substrat dans des conditions adaptées pour faire réagir ledit au moins un oxyde céramique avec du silicium du substrat de manière à former un revêtement en ledit au moins un oxyde céramique et une couche de transition comportant de la silice à la transition entre ledit substrat et ledit revêtement ;
c1) optionnellement, application d'une couche d'un matériau compliant à la surface extérieure dudit revêtement, ledit matériau compliant étant conforme au onzième aspect de l'invention décrit ci-après ;
d1) optionnellement, montage d'une première frette de manière que ladite première frette recouvre, au moins partiellement, de préférence totalement, ledit revêtement.

Alternativement, selon un quatrième aspect de la demande, on atteint ce but au moyen d'un procédé pour revêtir un substrat à base d'un composé de silicium au moyen d'un revêtement comportant au moins un oxyde céramique, ledit procédé comportant les étapes successives suivantes :
a2) oxydation, au moins en surface dudit substrat, dudit composé de silicium, par exemple par un traitement thermique sous atmosphère oxydante, de manière à former de la silice sur ladite surface,
b2) application sur ledit substrat, de préférence à température ambiante, de particules comportant, de préférence constituées par, ledit au moins un oxyde céramique ;
c2) traitement thermique dudit substrat dans des conditions adaptées pour faire réagir ledit au moins un oxyde céramique avec ladite silice de manière à former un revêtement en ledit au moins un oxyde céramique et une couche de transition comportant de la silice à la transition entre ledit substrat et ledit revêtement ;
d2) optionnellement, application d'une couche d'un matériau compliant à la surface extérieure dudit revêtement, ledit matériau compliant étant conforme au onzième aspect de l'invention décrit ci-après ;
e2) optionnellement, montage d'une première frette de manière que ladite première frette recouvre, au moins partiellement, de préférence totalement, ledit revêtement.

Alternativement encore, selon un cinquième aspect de la demande, on atteint ce but au moyen d'un procédé pour revêtir un substrat, en particulier à base d'un composé de silicium, par exemple à base de SiC, de nitrure de silicium Si₃N₄ ou de SiAlON, au moyen d'un revêtement comportant au moins un oxyde céramique, ledit procédé comportant les étapes successives suivantes :
a3) dépôt d'une couche de silicium en surface du substrat, de préférence par projection plasma ;
b3) application sur ladite couche de silicium, de préférence à température ambiante, de particules comportant, de préférence constituées par, ledit au moins un oxyde céramique ;
c3) optionnellement, traitement thermique dudit substrat pour faire réagir ledit au moins un oxyde céramique avec du silicium du substrat de manière à former un revêtement en ledit au moins un oxyde céramique et une couche de transition comportant de la silice à la transition entre ledit substrat et ledit revêtement ;
d3) optionnellement, application d'une couche d'un matériau compliant à la surface extérieure dudit revêtement, ledit matériau compliant étant conforme au onzième aspect de l'invention décrit ci-après ;
e3) optionnellement, montage d'une première frette de manière que ladite première frette recouvre, au moins partiellement, de préférence totalement, ledit revêtement.

L'étape c3) peut être réalisée comme l'étape b1). Cependant, dans ce procédé, avantageusement, aucun traitement thermique n'est nécessaire si, à l'étape b3) l'application des particules est effectuée par projection thermique. Le procédé en est avantageusement simplifié.

Quel que soit le procédé selon la demande pour revêtir un substrat à base d'un composé de silicium, les natures du revêtement et du composé de silicium du substrat ne sont pas limitatives. En particulier, le revêtement et/ou le substrat peuvent comporter une ou plusieurs caractéristiques du revêtement et du substrat définis dans le sixième aspect de l'invention.

Les procédés ci-dessus peuvent encore présenter une ou plusieurs des caractéristiques optionnelles suivantes :
- Le composé de silicium est un composé non oxyde. Les procédés sont en effet particulièrement bien adaptés à ce type de composés de silicium.
- A l'étape a1) ou b2), on applique les particules dudit au moins un oxyde céramique par pulvérisation, peinture ou trempage. A cet effet on prépare une barbotine que l'on applique sur le substrat. De préférence, la barbotine ne comporte pas de silice, de préférence ne comporte pas de composé de silicium.
- A l'étape b1) ou c2) ou c3), le substrat est soumis à une cuisson à une température comprise entre 1000°C et 1400°C, de préférence pendant une durée supérieure à 1 heure.
- L'étape b1) ou c2) ou c3) est effectuée *in situ*, c'est-à-dire après que le substrat revêtu ait été installé dans sa position de service. Avantageusement, le procédé en est simplifié et d'un coût réduit. Par exemple, lorsque le substrat est une première pièce d'un dispositif de liaison selon l'invention, cette étape peut être effectuée après fixation définitive dudit dispositif, par exemple après interposition entre deux tubes disposés au sein de four de production d'éthylène ou au sein d'un échangeur de chaleur. La cuisson résulte ainsi de la première utilisation du dispositif de liaison.

La demande concerne également une pièce comportant un substrat revêtu suivant un procédé selon l'un quelconque des troisième, quatrième et cinquième aspects de la demande.

### Sixième aspect de la demande

Selon un sixième aspect, la demande concerne encore une « pièce revêtue » comportant un substrat en un matériau à base d'un composé de silicium et un revêtement en un matériau de revêtement comportant au moins un oxyde céramique, une couche de transition comportant de la silice s'étendant entre le substrat et le revêtement.

Cette pièce revêtue peut présenter une ou plusieurs des caractéristiques optionnelles suivantes :
- La couche de transition présente une épaisseur supérieure à 0,1 µm et/ou inférieure à 20 µm.
- L'épaisseur de la couche de transition est inférieure à 10 µm, de préférence inférieure à 8 µm, de préférence inférieure à 6 µm.
- La couche de transition est constituée d'une couche de silice continûment adhérente au substrat.
- L'épaisseur du revêtement est inférieure à 300 µm, de préférence inférieure à 250 µm.
- L'épaisseur du revêtement, de préférence sensiblement constante, est supérieure à 10 µm, de préférence supérieure à 30 µm.
- Le matériau de revêtement présente une conductivité thermique et/ou une émissivité inférieure et/ou une effusivité supérieure à celle du substrat.
- Le rapport de la conductivité thermique du matériau du substrat sur la conductivité thermique du matériau de revêtement est supérieur à 10 et/ou inférieur à 150.
- Le matériau de revêtement présente une conductivité thermique inférieure à 10 W.m.°C, de préférence est un matériau réfractaire.
- Le composé de silicium est un composé non oxyde.
- Le matériau de revêtement comporte plus de 50%, de préférence plus de 80%, de préférence plus de 90%, de préférence encore sensiblement 100% dudit au moins un oxyde céramique, en pourcentage massique.
- Le matériau de revêtement est choisi dans le groupe formé par la zircone, éventuellement dopée, notamment en magnésie ou en oxyde d'yttrium ; la cordiérite ; l'alumine ; la mullite ; le spinelle alumine-magnésie ; le titanate d'aluminium ; l'oxyde d'yttrium ; l'oxyde de magnésium ; l'oxyde d'hafnium et les mélanges de ces matières. Avantageusement, la pièce revêtue présente alors de bonnes propriétés anti-adhésion et anti-rayures, résiste bien à la corrosion et présente une faible exsudation en température.
- Le matériau de revêtement comporte plus de 80% de zircone. Le matériau de revêtement peut notamment être de la zircone ou une zircone dopée. De préférence, le matériau de revêtement comporte moins de 5%, moins de 1%, moins de 0,1%, voire pas de composé d'alliage métallique de silicium, et en particulier de silice.
- Le revêtement est recouvert, au moins en partie, de préférence complètement, par une couche en un matériau compliant selon le onzième aspect de l'invention, et/ou par une première frette, en particulier telle que décrite selon le premier aspect de l'invention. Avantageusement, le revêtement agit efficacement comme une barrière anti-diffusion améliorant la résistance aux chocs thermiques.
- De préférence, le revêtement est recouvert, au moins en partie, de préférence complètement, par une couche en un matériau compliant selon le onzième aspect de la demande, elle-même recouverte par une première frette, en particulier telle que décrite selon le premier aspect de la demande.
- Le substrat comporte un matériau céramique.
- La quantité massique de carbure de silicium dans le substrat est supérieure à 80%, de préférence supérieure à 90%. De préférence ledit matériau du substrat est constitué de carbure de silicium.
- Le substrat présente une porosité totale inférieure à 5%, inférieure à 2%, voire inférieure à 1%.
- La pièce revêtue est une pièce destinée à servir de support de cuisson, notamment pour la cuisson de pièces céramiques. En particulier, le revêtement peut être appliqué sur une surface plane d'un support de cuisson.
- La pièce revêtue est fabriquée suivant un procédé conforme à l'un quelconque des troisième, quatrième et cinquième aspects de la demande.
- Le substrat et ledit au moins un oxyde céramique sont choisis de manière à fabriquer une « première pièce » d'un dispositif selon un ou plusieurs autres aspects de la demande. Une pièce revêtue selon le sixième aspect de la demande peut ainsi encore comporter une ou plusieurs des caractéristiques, éventuellement optionnelles, d'une « première pièce » d'un dispositif selon ou un plusieurs autres aspects de la demande.

La demande concerne également une pièce revêtue selon la demande sous la forme d'un support de cuisson ou d'une pièce frettée ou d'une frette.

Comme expliqué ci-dessus, le revêtement peut en effet notamment être utilisé pour revêtir une première pièce afin d'éviter des transferts thermiques trop rapides avec une première frette lors du montage de cette dernière.

Les inventeurs ont également découvert que lorsqu'une première frette est montée sur une pièce revêtue selon la demande, le revêtement limite très efficacement les réactions chimiques entre les matériaux de la première pièce et de la première frette. Le revêtement agit ainsi comme une barrière limitant la diffusion de matière entre la première pièce et la première frette. Il en résulte une résistance au cyclage thermique améliorée.

En particulier pour limiter ces transferts thermiques et/ou ces réactions chimiques, mais sans y être limité, les caractéristiques suivantes, optionnelles, sont préférées :
- La première frette est elle-même frettée au moyen d'une deuxième frette.
- Le revêtement recouvre au moins partiellement une surface cylindrique, notamment de section transversale circulaire, de la première pièce et/ou de la première frette et/ou, le cas échéant, de la deuxième frette.
- Le revêtement ceinture ladite surface cylindrique.
- Le revêtement définit au moins une partie, de préférence la totalité de la zone de contact entre ladite première frette et ladite première pièce et/ou, le cas échéant entre ladite deuxième frette et ladite première frette.
- Le revêtement est disposé au moins sur au moins 50%, de préférence au moins 80%, de préférence encore sensiblement 100% de ladite zone de contact.
- De préférence, le revêtement s'étend à partir du bord de la première pièce ou de la première frette par laquelle la première pièce pénètre dans la première frette lors du montage.
- Une deuxième pièce est fixée sur la première frette.

La première pièce et/ou la deuxième pièce et/ou la première frette et/ou la deuxième frette peuvent être ou ne pas être une première pièce et/ou une deuxième pièce et/ou une première frette et/ou une deuxième frette d'un dispositif selon un ou plusieurs autres aspects de la demande, respectivement. Un dispositif selon le sixième aspect de la demande peut ainsi encore comporter une ou plusieurs des caractéristiques, éventuellement optionnelles, d'un dispositif selon un ou plusieurs autres aspects de la demande.

De manière générale, la demande concerne un ensemble comportant une pièce revêtue telle que décrite ci-dessus et une frette montée sur ladite pièce revêtue, ladite pièce revêtue comportant un substrat en un matériau à base d'un composé de silicium et un revêtement en un matériau de revêtement contenant au moins un oxyde céramique, une couche de transition comportant de la silice s'étendant entre le substrat et le revêtement, ledit revêtement définissant au moins une partie de la zone de contact entre ladite frette et ladite pièce revêtue.

La demande concerne encore l'application d'un revêtement tel que défini ci-dessus entre une première pièce et une première frette montée sur la première pièce comme « barrière anti-diffusion », c'est-à-dire pour limiter la migration de matière entre lesdites première pièce et première frette.

### Septième aspect de la demande

Ainsi, selon un septième aspect, la demande concerne encore un procédé de frettage d'une première pièce, en particulier en un matériau céramique, au moyen d'une première frette, procédé dans lequel, avant montage de la première frette sur la première pièce, on applique sur la première pièce et/ou sur la première frette un revêtement en un matériau présentant une conductivité thermique inférieure et/ou une effusivité supérieure à celle de la première pièce.

Le revêtement est de préférence appliqué sur la première pièce lorsque la première frette est chauffée pour autoriser le montage.

Le revêtement est de préférence appliqué suivant un procédé pour revêtir un substrat conforme à la demande.

De préférence, ce procédé est adapté pour que la première pièce soit une pièce revêtue conforme à la demande.

### Huitième aspect de la demande

Au cours de leurs essais, les inventeurs ont également constaté que l'assemblage d'un tube céramique à un tube métallique au moyen d'une ou plusieurs frettes, comme décrit selon le premier aspect de la demande, peut conduire à des cassures du tube céramique.

Il existe donc un besoin pour une solution permettant de limiter la détérioration d'une pièce en matière céramique lorsqu'elle est frettée au moyen d'une première frette.

Un objectif de la demande est de répondre à ce besoin. Selon un huitième aspect de la demande, on atteint cet objectif au moyen d'un dispositif comportant une première pièce en matière céramique frettée au moyen d'une première frette, dispositif dans lequel les bords des extrémités axiales de la partie cylindrique de ladite première pièce et de la première frette par lesquels la première frette a été montée sur la première pièce appartiennent à un même plan transversal.

Autrement dit, la première frette s'étend jusqu'au bord de la partie cylindrique de ladite première pièce sur laquelle elle a été montée, mais sans en faire saillie axialement. Par souci de clarté, on dit que la première frette est montée « affleurante » sur la première pièce.

Dans le cas d'un assemblage bout à bout de deux tubes ou de deux barres, ce type de montage est original, la recherche d'une solidarisation rigide de ces tubes ou barres incitant naturellement à ce qu'au moins la première frette soit montée à cheval sur ces deux tubes ou barres. Les inventeurs ont cependant constaté qu'un montage « affleurant » limite très significativement la détérioration de la première pièce lors du montage de la première frette.

On dit que deux bords « appartiennent à un même plan transversal » lorsque leur décalage axial est inférieur à 1 mm. De préférence selon l'invention, ce décalage est inférieur à 0,8 mm, de préférence inférieur à 0,5 mm, de préférence encore inférieur à 0,3 mm, de préférence toujours, inférieur à 0,1 mm. Dans le cas où un ou deux desdits bords ne serai(en)t pas inclus dans un plan transversal, on considère que les deux bords « appartiennent à un même plan transversal » lorsque, quel que soit le point d'un bord considéré, la distance avec l'autre bord est inférieure à 1 mm, de préférence inférieure à 0,8 mm, de préférence inférieure à 0,5 mm, de préférence encore inférieure à 0,3 mm, de préférence toujours, inférieure à 0,1 mm.

On appelle « plan transversal » un plan perpendiculaire à l'axe de la première frette.

Un dispositif selon le huitième aspect de la demande peut optionnellement encore comporter une ou plusieurs des caractéristiques suivantes :
- Une deuxième pièce est fixée, de préférence soudée ou brasée, sur la première frette.
- La première frette est elle-même, de préférence, frettée au moyen d'une deuxième frette.
- La deuxième frette est montée affleurante sur la première frette. Autrement dit, les bords des extrémités axiales de la première frette, de la deuxième frette et de la première pièce appartiennent à un même plan transversal.
- Une deuxième pièce est fixée sur la première frette, de préférence de manière à définir, en coopération avec la première frette, une chambre, de préférence étanche, dans laquelle la deuxième frette est logée.

La première pièce et/ou la deuxième pièce et/ou la première frette et/ou la deuxième frette peuvent être ou ne pas être une première pièce et/ou une deuxième pièce et/ou une première frette et/ou une deuxième frette d'un dispositif selon un ou plusieurs autres aspects de la demande, respectivement. Un dispositif selon le huitième aspect de la demande peut ainsi encore comporter une ou plusieurs des caractéristiques, éventuellement optionnelles, d'un dispositif selon un ou plusieurs autres aspects de la demande.

### Neuvième aspect de la demande

Dans un mode de réalisation d'un dispositif selon le premier aspect de la demande, la deuxième pièce est fixée sur la première frette par soudure ou brasure. Ce type de liaison est en effet avantageusement résistant mécaniquement et durable. Les inventeurs ont cependant constaté que lorsque la première pièce est en matière céramique, elle peut se casser au moment de la fixation de la deuxième pièce.

Il existe donc un besoin pour solution permettant de limiter ce risque de casse.

Un objectif de la demande est de répondre à ce besoin.

Selon un neuvième aspect de la demande, on atteint cet objectif au moyen d'un dispositif comportant une première pièce en matière céramique frettée au moyen d'une première frette et une deuxième pièce fixée sur ladite première frette, par exemple par un procédé de chauffage, la région de jonction entre la première frette et la deuxième pièce étant en tout point écartée d'au moins 1 mm de ladite première pièce. Par exemple, dans le mode de réalisation de la figure 3, cet écartement d'au moins 0,8 mm, voire d'au moins 1 mm correspond à l'écartement radial δ entre la surface extérieure du tube céramique et le cordon de soudure permettant de lier le tube métallique à la première frette.

Comme on le verra plus en détail dans la suite de la description, l'écartement de la zone de jonction limite les interactions avec la première pièce lors de la fixation de la deuxième pièce sur la première frette. En particulier lorsque la deuxième pièce est soudée ou brasée sur la première frette, cet écartement réduit les gradients thermiques au sein de la première pièce.

Un dispositif selon le neuvième aspect de la demande peut optionnellement encore comporter une ou plusieurs des caractéristiques suivantes :
- La région de jonction s'étend au droit de la première pièce. En particulier, lorsque la première pièce est un tube, ledit écartement est un écartement radial, mesuré selon une droite incluse dans un plan transversal et passant par l'axe du tube.
- Ledit écartement, en particulier lorsqu'il est radial, est supérieur à 0,8 mm, supérieur à 1 mm, de préférence supérieur à 3 mm, de supérieur à 5 mm, de préférence encore supérieur à 10 mm, ou même supérieur à 15 mm.
- La deuxième pièce est soudée ou brasée sur la première frette.
- La première frette présente une collerette, continue ou discontinue, de préférence continue, sur le bord de laquelle la deuxième pièce est fixée.
- La collerette est continue et ceinture ladite première frette.
- La collerette est ménagée à une extrémité axiale de ladite première frette.
- La collerette est disposée à l'extrémité axiale de la première frette par laquelle la première frette a été montée (c'est-à-dire introduite axialement) sur la première pièce.
- La première frette est elle-même frettée au moyen d'une deuxième frette.

Dans un mode de réalisation particulièrement avantageux, la première frette n'est pas montée affleurante sur la première pièce, mais en fait saillie axialement, et la deuxième pièce est fixée sur la partie de la première frette en saillie, de préférence à l'extrémité de la première frette opposée à l'extrémité par laquelle elle a été enfilée sur la première pièce. Avantageusement, ce mode de réalisation n'impose pas le ménagement d'une collerette, ce qui simplifie la fabrication de la première frette. Il permet en outre un encombrement minimal.

De préférence, la deuxième frette éventuelle est cependant montée affleurante sur la première pièce, c'est-à-dire qu'elle s'étend jusqu'au bord de la partie cylindrique de ladite première pièce sur laquelle elle a été montée.

La première pièce et/ou la deuxième pièce et/ou la première frette et/ou la deuxième frette peuvent être ou ne pas être une première pièce et/ou une deuxième pièce et/ou une première frette et/ou une deuxième frette, respectivement, d'un dispositif selon un ou plusieurs autres aspects de la demande.

Un dispositif selon le neuvième aspect de peut ainsi encore comporter une ou plusieurs des caractéristiques, éventuellement optionnelles, d'un dispositif selon un ou plusieurs autres aspects de la demande.

### Dixième aspect de la demande

Les inventeurs ont encore cherché à augmenter la durée de vie d'un dispositif selon le premier aspect de la demande.

Selon un dixième aspect de la demande, ils ont ainsi découvert un dispositif comportant une première pièce en un matériau céramique frettée au moyen d'une première frette, dans lequel au moins une partie de la première frette, de préférence au moins la partie de la première frette en contact avec la première pièce, voire la totalité de la première frette, est protégée par recouvrement au moyen d'un bouclier.

De préférence, la première frette est elle-même frettée au moyen d'une deuxième frette et au moins une partie de la deuxième frette, de préférence au moins la partie de la deuxième frette en contact avec la première frette, voire la totalité de la deuxième frette, est protégée par recouvrement au moyen d'un bouclier.

Comme on le verra plus en détail dans la suite de la description, la mise en place d'un bouclier de protection recouvrant au moins partiellement une frette, permet de limiter sa détérioration, notamment par des agressions mécaniques, et donc d'augmenter la durée de vie du dispositif.

Un dispositif selon le dixième aspect de la demande peut optionnellement encore comporter une ou plusieurs des caractéristiques suivantes :
- Le bouclier ceinture la première frette et/ou la deuxième frette.
- Le bouclier n'est pas en contact avec la partie de la première frette en contact avec la première pièce.
- Le bouclier n'est pas en contact avec la deuxième frette.
- Le bouclier, de préférence en coopération avec la première frette, délimite une chambre, de préférence annulaire.
- La deuxième frette est logée dans ladite chambre.
- La chambre est étanche à l'air.
- La chambre peut présenter une section quelconque. Elle peut s'étendre sur tout ou partie de la périphérie de la partie de la première pièce sur laquelle est fixée la première frette.
- La chambre contient un fluide de refroidissement ou de réfrigération ou caloporteur ou isolant thermiquement ou isolant chimiquement et/ou des moyens de mesure, en particulier des moyens de mesure de la pression et/ou de la température et/ou des moyens de détection et/ou des moyens d'analyse de l'environnement.
- Une deuxième pièce est fixée, de préférence soudée, sur la première frette, de préférence par l'intermédiaire dudit bouclier.
- Le bouclier fait partie de la deuxième pièce et, de préférence, est venu de matière avec la deuxième pièce.
- Le bouclier, voire la deuxième pièce, est fixé, de préférence soudé, sur une collerette de la première frette, de préférence sur le bord libre de ladite collerette, ladite collerette étant de préférence venue de matière avec la première frette.
- La collerette est disposée à l'extrémité de la première frette par laquelle la première frette a été montée sur la première pièce. Le cas échéant, la collerette est de préférence disposée du côté de la première frette opposé, par rapport à la deuxième frette, à l'extrémité axiale de la partie cylindrique de la première pièce par laquelle la première frette a été montée sur la première pièce.
- La deuxième frette est disposée axialement entre la collerette et le bord de l'extrémité axiale de la première pièce par laquelle la première frette a été montée sur la première pièce.
- La quantité massique de carbure de silicium dans le matériau de la première pièce est supérieure à 80%.

La première pièce et/ou la deuxième pièce et/ou la première frette et/ou la deuxième frette peuvent être ou ne pas être une première pièce et/ou une deuxième pièce et/ou une première frette et/ou une deuxième frette, respectivement, d'un dispositif selon un ou plusieurs autres aspects de la demande. Un dispositif selon le dixième aspect de la demande peut ainsi encore comporter une ou plusieurs des caractéristiques, éventuellement optionnelles, d'un dispositif selon un ou plusieurs autres aspects de la demande.

### Onzième aspect de la demande

Lors des opérations de nettoyage, la pression à l'intérieur des tubes d'une unité de production d'éthylène peut être augmentée considérablement et atteindre typiquement plusieurs bars. Lors du cyclage thermique, l'étanchéité de la liaison par les frettes peut être également remise en cause par la pression du mélange réactif, typiquement supérieure à 2,5 bars, à des températures supérieures à 900°C, voire supérieures à 1000°C.

Les inventeurs ont donc recherché des solutions complémentaires pour améliorer l'étanchéité de la liaison entre deux pièces soumises à de telles contraintes, et en particulier entre deux pièces présentant des coefficients de dilatation très différents.

Selon un onzième aspect de la demande, ils ont ainsi découvert un dispositif comportant un premier organe assemblé à un deuxième organe présentant de préférence un coefficient de dilatation supérieur au premier organe, l'assemblage étant effectué par l'intermédiaire d'un matériau compliant constitué par un alliage comportant au moins deux matières parmi l'argent, l'or, et le palladium. Les inventeurs ont constaté que ledit matériau compliant résiste très bien à un environnement soumis de grandes variations de températures, en assurant une bonne cohésion des organes assemblés et une étanchéité de la liaison.

Un dispositif selon le onzième aspect de la demande peut optionnellement encore comporter une ou plusieurs des caractéristiques suivantes :
- L'alliage comporte, voire est constitué
- d'argent et/ou d'or et
- de palladium.
- L'alliage comporte plus de 0,5%, voire plus de 3% de palladium, en pourcentage massique.
- L'alliage comporte moins de 50% de palladium, en pourcentage massique.
- L'alliage comporte moins de 30% de palladium, en pourcentage massique.
- L'alliage comporte moins de 5 % de fritte de verre.
- L'épaisseur de matériau compliant entre les deux organes est inférieure à 1 mm et/ou supérieure à 5 µm, de préférence supérieure à 10 µm.
- Le deuxième organe est une frette du premier organe.
- Le deuxième organe est lui-même fretté au moyen d'un troisième organe.
- Le matériau du troisième organe présente une teneur massique en niobium et/ou en

Dilver P1 supérieure à 80%.
- L'assemblage du troisième organe sur le deuxième organe est effectué par l'intermédiaire d'une couche en ledit matériau compliant.
- Le matériau du deuxième organe présente un coefficient de dilatation supérieur au matériau du premier organe et, le cas échéant, le troisième organe présente un coefficient de dilatation inférieur au coefficient de dilatation du deuxième organe, entre 20°C et 1000°C.
- La quantité massique de carbure de silicium dans le matériau du premier organe est supérieure à 80%.
- Un quatrième organe est fixé sur le deuxième organe.
- Le premier organe est revêtu d'un revêtement en un matériau réfractaire.
- Le matériau réfractaire est de préférence choisi parmi la zircone, une zircone dopée, la cordiérite, l'alumine, la mullite, le titanate d'aluminium, l'oxyde d'yttrium, l'oxyde de magnésium, l'oxyde d'hafnium et un mélange de ces matériaux.
- Le premier organe est revêtu d'un revêtement en un matériau présentant une conductivité thermique inférieure à celle du matériau du premier organe.
- Le revêtement est conforme à celui décrit selon le deuxième aspect de la demande.

La demande concerne aussi un procédé d'assemblage d'un premier organe et d'un deuxième organe par l'intermédiaire d'un matériau compliant interposé entre une première surface du premier organe et une deuxième surface du deuxième organe, procédé dans lequel
a) on enduit au moins une des première et deuxième surfaces au moyen d'un précurseur d'un matériau compliant tel que défini ci-dessus ;
b) on presse la première surface sur la deuxième surface avec une pression supérieure à 5 MPa, et
c) de préférence simultanément à l'étape b) on chauffe à une température supérieure à 150°C lesdites première et deuxième surfaces en contact.

De préférence, à l'étape a), on enduit du précurseur de matériau compliant à la fois la première surface et la deuxième surface. De préférence encore, à l'étape b), la pression est exercée en frettant le premier organe au moyen du deuxième organe.

Le précurseur de matériau compliant peut en particulier être une suspension de poudres d'argent et/ou d'or et de palladium.

Le premier organe et le deuxième organe peuvent en particulier être une première pièce et une première frette, respectivement, ou une première frette et une deuxième frette, respectivement, d'un dispositif selon un ou plusieurs autres aspects de la demande. En présence d'une première pièce et de deux frettes, le précurseur de matériau compliant peut en particulier être disposé de manière que le matériau compliant s'étende entre la première pièce et la première frette et entre la première frette et la deuxième frette. Le troisième organe peut aussi être une deuxième frette. Un dispositif selon le onzième aspect de la demande peut encore comporter une ou plusieurs des caractéristiques, éventuellement optionnelles, d'un dispositif selon un ou plusieurs autres aspects de la demande.

La demande concerne aussi un appareil choisi parmi un four, une chaudière, un surchauffeur, un générateur de vapeur, un réacteur chimique et un échangeur thermique, notamment destiné à la production d'éthylène, ledit appareil comportant un dispositif selon l'un quelconque des aspects de la demande. En particulier, ledit appareil peut comporter au moins un tube en un matériau à base d'un composé de silicium, en particulier en carbure de silicium, fixé par au moins une de ses extrémités à un tube métallique,
- le tube en un matériau à base d'un composé de silicium et le tube métallique constituant respectivement une première pièce et une deuxième pièce d'un dispositif selon l'un quelconque des aspects de la demande et/ou
- le tube en un matériau à base d'un composé de silicium constituant une pièce revêtue selon le sixième aspect de la demande et/ou
- le tube en un matériau à base d'un composé de silicium ou une première frette montée sur le tube en un matériau à base d'un composé de silicium constituant un premier organe d'un dispositif selon le onzième aspect de la demande et/ou
- le tube en un matériau à base d'un composé de silicium, la première frette montée sur le tube en un matériau à base d'un composé de silicium, la deuxième frette montée sur la première frette et le tube métallique constituant un premier organe, un deuxième organe, un troisième organe et un quatrième organe, respectivement, d'un dispositif selon le onzième aspect de la demande.

### Douzième aspect de la demande

Les inventeurs ont également recherché à améliorer la qualité de la connexion d'un tube céramique avec un tube métallique d'un dispositif de liaison selon la demande, notamment dans un environnement tel que celui d'un four de production d'éthylène. Ils ont ainsi découvert des ajustements particulièrement avantageux.

Si on désigne par
- DE : le diamètre extérieur de l'ensemble formé par le tube céramique, optionnellement le revêtement en un matériau présentant une conductivité thermique inférieure à celle du matériau du tube céramique (selon le deuxième aspect de l'invention), optionnellement la couche en matériau compliant entre le tube céramique et la première frette (selon le onzième aspect de l'invention),
- DE₄₂ : le diamètre extérieur de la première frette,
- DI₄₂ : le diamètre intérieur de la première frette,
- DI₄₂ : le diamètre intérieur de la deuxième frette,
- Δ₁ : le rapport 100*(DE-DI₄₂)/DE, et
- Δ₂ : le rapport 100*(DE₄₂-DI₄₄)/DE₄₂.
toutes les mesures étant effectuées à 20°C,
Δ₁ et/ou Δ₂, de préférence Δ₁ et Δ₂ sont supérieurs ou égaux à 0,00 et/ou inférieurs à 0,25, voire inférieurs ou égaux à 0,20.
De préférence, Δ₁ est supérieur ou égal à 0,05.

### Brève description des figures

D'autres caractéristiques et avantages de la demande apparaîtront encore à la lecture de la description détaillée qui va suivre et du dessin annexé dans lequel :
- la figure 1 représente, schématiquement, une unité de production d'éthylène ;
- la figure 2 représente, en coupe transversale, une frette et une pièce frettée avant et après assemblage ;
- la figure 3 représente, en perspective et coupé par un plan longitudinal médian, un dispositif selon un mode de réalisation préféré de l'invention ;
- les figures 4 à 6 illustrent les différentes étapes d'un procédé utilisé pour assembler le dispositif représenté sur la figure 3 ; et
- la figure 7 représente une variante d'un dispositif selon la demande.

Dans les différentes figures, des références identiques sont utilisées pour désigner des organes identiques ou analogues.

### Description détaillée

La figure 1 a été décrite en préambule de la description.

Le frettage est une technique de montage axial d'une pièce extérieure sur une pièce intérieure exploitant une différence de comportement dilatométrique entre ces deux pièces. La pièce extérieure est classiquement appelée « frette », en anglais « flange ». La pièce intérieure est dite « frettée ».

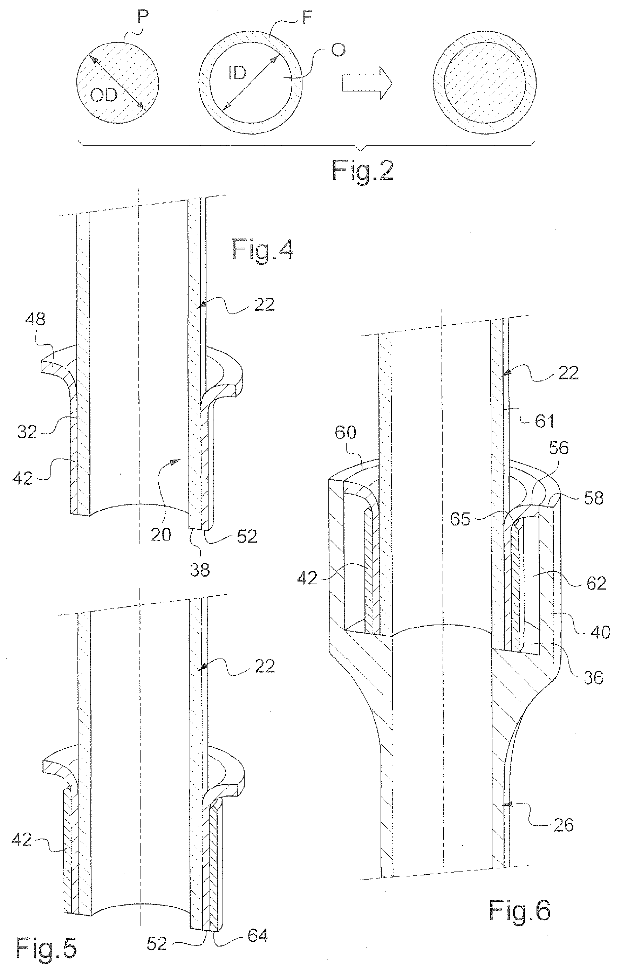

Plus précisément, la frette est en un matériau présentant un coefficient de dilatation thermique supérieur à celui de la pièce intérieure. Comme représenté sur la figure 2, la frette F présente un orifice O, délimité par une surface intérieure, dont les dimensions rendent difficile, voire impossible son montage sur la pièce intérieure P à la main ou même, classiquement, à la presse. Lorsque la frette F est cylindrique de section transversale circulaire, son diamètre intérieur ID est ainsi inférieur au diamètre extérieur OD de la pièce intérieure P dans la plage des températures prévues pour l'utilisation de l'assemblage. Dans cette plage, le montage de la frette est donc impossible. Pour cela, la frette F doit être portée à une température supérieure à celle de la pièce intérieure P. Cet écart de températures peut être obtenu en chauffant la frette F et/ou en refroidissant la pièce intérieure P, par exemple avec de l'azote liquide ou avec de la glace carbonique. L'écart de températures doit être déterminé pour que les dimensions de l'orifice 0 de la frette F autorisent alors son introduction sur la pièce intérieure.

Une fois la frette F introduite sur la pièce intérieure P, l'ensemble est ramené à la même température, par exemple à la température ambiante initiale, ce qui conduit la frette F à comprimer la pièce intérieure et assure la cohésion entre la frette F et la pièce intérieure P. Cette cohésion peut cependant être remise en cause si la température de l'environnement de l'assemblage augmente. En effet, la frette va alors se dilater plus rapidement que la pièce intérieure. Une augmentation de la température peut donc conduire à une perte d'étanchéité, voire à une désolidarisation involontaire des pièces.

En particulier, dans les conditions de variation de température d'un four d'une unité de production d'éthylène, les inventeurs ont constaté qu'un assemblage d'un tube métallique par frettage sur un tube céramique est insatisfaisant. Les coefficients de dilatation thermique des matériaux de ces tubes sont en effet trop différents pour que le frettage puisse assurer une liaison fiable sur une plage de températures d'une amplitude de plus de 1000°C.

US 4,624,484 décrit un dispositif de connexion permettant d'assembler une pièce céramique au moyen d'une frette. Avant montage de la frette, une couche en un métal non ferreux est appliquée sur la surface intérieure de la frette destinée à être mise en contact avec la pièce céramique. Après montage, cette couche se déforme de manière à compenser les différences de dilatation entre le tube céramique et la frette. Une telle couche, ou de manière générale un revêtement, ne sont pas des frettes.

Les inventeurs ont alors imaginé assurer la liaison entre le tube céramique et le tube métallique au moyen de plusieurs frettes intermédiaires présentant des coefficients de dilatation augmentant progressivement : Une première frette présentant un coefficient de dilatation thermique légèrement supérieur à celui du tube céramique a été montée sur ce tube céramique, une deuxième frette présentant un coefficient de dilatation thermique légèrement supérieur à celui de la première frette a été montée sur cette première frette, ce type de montage étant reproduit jusqu'à obtenir une frette présentant un coefficient de dilatation thermique similaire à celui du tube métallique. Le tube métallique a ensuite été fixé sur cette dernière frette. Des essais ont cependant montré que, dans les conditions de variation de température d'un four d'une unité de production d'éthylène, cette solution technique conduit à l'application de contraintes élevées sur le tube céramique et peut amener à sa rupture.

Les inventeurs ont alors imaginé et réalisé un dispositif de liaison de conception tout à fait différente.

Dans un mode de réalisation, ce dispositif de liaison comporte une première frette montée sur le tube céramique et une deuxième frette montée sur la première frette, la deuxième frette présentant un coefficient de dilatation inférieur à celui de la première frette. En cas d'augmentation de la température, la deuxième frette s'oppose donc à la dilatation de la première frette, et empêche ainsi une perte d'étanchéité ou une désolidarisation de la première frette. En outre, ce type d'assemblage s'est révélé particulièrement fiable dans les conditions d'un four de production d'éthylène.

La figure 3 représente un exemple d'assemblage au moyen d'un dispositif de liaison selon un mode de réalisation préféré, non limitatif, de l'invention.

Dans un souci de clarté, on considère que les tubes représentés sur la figure 3 sont positionnés suivant un axe vertical V. De manière non limitative, on utilise les mots « haut », « bas », « supérieur » et « inférieur » pour qualifier des organes ou des parties d'organe en fonction de leur position par rapport à cet axe.

La figure 3 représente la partie inférieure 20 d'un tube céramique 22 d'axe X connectée coaxialement à la partie supérieure 24 d'un tube métallique 26 au moyen d'un dispositif de liaison 30.

Les tubes céramique 22 et métallique 26 présentent, sauf au niveau du dispositif de liaison, des sections transversales annulaires identiques. Le diamètre extérieur des tubes 22 et 26 est de préférence supérieur à 50 mm et/ou inférieur à 100 mm. Le diamètre intérieur des tubes 22 et 26 est de préférence supérieur à 40 mm et/ou inférieur à 50 mm.

Le tube céramique 22 est en un matériau non oxyde, de préférence en carbure de silicium et présente de préférence une porosité inférieure à 1%, cette porosité étant fermée.

La partie inférieure 20 du tube céramique 22 est revêtue d'un revêtement 32 isolant thermiquement, par exemple en zircone. Le revêtement 32 s'étend suivant une surface annulaire destinée à servir de support à une première frette qui sera décrite ci-après. Il présente une épaisseur d'environ 30 µm.

Des clichés montrent, à l'interface entre le carbure de silicium du tube céramique 22 et la zircone du revêtement 32, la présence d'une couche de transition d'une épaisseur sensiblement constante d'environ 5 µm. La couche de transition est constituée d'une couche de silice continûment adhérente au tube céramique 32.

Sauf dans sa partie supérieure 24, le tube métallique 26 est un tube similaire aux tubes utilisés dans la technique intérieure en amont ou en aval des fours utilisés pour la production d'éthylène.

La partie supérieure 24 du tube métallique 26 comporte une paroi 34 dont l'épaisseur s'élargit progressivement jusqu'à être maximale dans un plan transversal P₁. Dans ce plan, le tube métallique 26 présente une surface annulaire 36 plane, sur laquelle un bord inférieur 38 du tube céramique 22 et/ou le bord inférieur de la première frette décrite ci-après viennent, dans le mode de réalisation non limitatif de la figure 3, prendre appui. Une jupe périphérique 40 cylindrique de section circulaire d'axe X s'étend vers le haut à partir de la périphérie de la surface annulaire 36.

Le dispositif de liaison 30 comporte une première frette 42 et une deuxième frette 44.

La première frette 42 est constituée en un matériau présentant un coefficient de dilatation inférieur à 25.10⁻⁶ K⁻¹ et supérieur à 10 x 10⁻⁶ K⁻¹ entre 20 et 1000°C, de préférence est constituée dans le même matériau que le tube métallique 26, par exemple en acier HP40 ou en un alliage FeNiCr. L'utilisation du même matériau pour fabriquer le tube métallique 26 et la première frette 42 facilite avantageusement leur soudure l'un à l'autre.

La première frette 42 présente une longueur L₄₂ totale d'environ 60 mm et une épaisseur e₄₂ de paroi sensiblement constante, de préférence comprise entre 1 et 5 mm, de préférence d'environ 2 mm. Les actions de la deuxième frette sur la première frette et de la première frette sur le tube céramique 22 sont alors optimales en cas d'augmentation de la température de 20°C à 900°C.

Dans un mode de réalisation, la première frette 42 présente une épaisseur e₄₂ de paroi sensiblement constante supérieure à 3 mm, voire supérieure à 3,5 mm, voire sensiblement égale à 4 mm. Les inventeurs ont en effet découvert que l'épaisseur de la première frette modifie la qualité de l'étanchéité de la liaison à température ambiante, les meilleurs résultats ayant été obtenus avec une épaisseur e₄₂ d'environ 4 mm.

La première frette 42 présente la forme d'un manchon cylindrique 46 de section circulaire et d'une longueur L₄₆ d'environ 50 mm, prolongé, vers le haut, par une collerette 48.

Sur toute sa longueur, le manchon cylindrique 46 est en contact avec le revêtement 32 du tube céramique 22, par l'intermédiaire d'une couche 50 d'un matériau compliant améliorant l'étanchéité entre le tube céramique et la première frette. La couche 50 présente une épaisseur, sensiblement constante, d'environ 30 µm.

Le matériau compliant comporte d'une part de l'argent et/ou de l'or, et d'autre part du palladium. Les inventeurs ont découvert qu'un tel matériau est particulièrement fiable. En particulier, ce matériau présente une très bonne réfractarité et une température de fusion très élevée qui le rendent compatible avec les contraintes rencontrées dans un four d'une unité de production d'éthylène.

Par exemple, le matériau compliant comporte environ 30% de palladium, le complément étant de l'argent.

Le manchon cylindrique 46 définit un bord inférieur 52 de la première frette 42. Le bord inférieur 52 du manchon cylindrique 46 est coplanaire au bord inférieur 38 du tube céramique 22 et peut être en contact avec la surface annulaire 36. Les inventeurs ont en effet découvert que cette configuration limite les risques de rupture du tube céramique 22.

La collerette 48 résulte d'un évasement progressif jusqu'à ce que la paroi de la première frette s'étende sensiblement perpendiculairement à l'axe X. Cet évasement progressif limite les risques de cassure du tube céramique lors du montage de la première frette 42 et facilite l'introduction du tube céramique 22 dans la première frette 22. La collerette 48 définit un "bord supérieur" 56, circulaire, de la première frette 42.

Le bord supérieur 58 de la jupe périphérique 40 est fixé sur le bord supérieur 56 de la collerette 48 au moyen d'un cordon de soudure 60. L'écartement radial δ entre la surface extérieure 61 du tube céramique 22 et le cordon de soudure 60 est par exemple d'environ 5 mm.

La surface annulaire 36, la jupe périphérique 40 et la première frette 42 définissent ainsi une chambre 62. Le cordon de soudure 60 est de préférence continu de sorte que la chambre 62 est sensiblement étanche. Eventuellement, la chambre 62 est également isolée du volume intérieur des tubes céramique 22 et métallique 26.

Le volume intérieur de la chambre 62 est de quelques dizaines de cm³, de préférence de plus de 20 cm³, de plus de 50 cm³, et/ou de préférence inférieur à 100 cm³, inférieur à 80 cm³, de préférence d'environ 70 cm³. Avantageusement, l'accumulation éventuelle de coke est ainsi limitée.

La deuxième frette 44 est constituée en un matériau présentant un coefficient de dilatation inférieur à celui de la première frette. La différence des coefficients de dilatation entre la première frette et la deuxième frette est déterminée en fonction de l'application. Lorsque le dispositif de liaison est destiné à subir des variations des températures telles que celles rencontrées à l'intérieur de l'enceinte d'un four d'unité de production d'éthylène ou immédiatement en amont ou en aval d'une telle enceinte, la deuxième frette peut notamment être en un alliage comportant plus de 70% de niobium et/ou de Dilver P1. Un tel alliage de niobium et/ou de Dilver P1 présente avantageusement un faible coefficient de dilatation thermique, un faible module de Young (module d'élasticité), et une bonne résistance à la chaleur et à la corrosion à haute température, cette dernière pouvant encore être améliorée par la présence d'un coating. Par exemple, le matériau de la deuxième frette comporte 89% de niobium, 10% d'hafnium et 1% de titane. La résistance à la corrosion peut encore être améliorée en revêtant la deuxième frette d'un revêtement de protection, ou "coating" du type "revêtement 32". La deuxième frette 44 présente la forme d'un manchon cylindrique de section circulaire et est montée sur la première frette par frettage par l'intermédiaire d'une couche 63 de matériau compliant, par exemple identique à celui s'étendant entre le tube céramique et la première frette.

La longueur L₄₄ de la deuxième frette 44 est sensiblement identique à celle du manchon cylindrique 46 de la première frette 42. L'épaisseur e₄₄ est comprise entre 3 et 15 mm, de préférence entre 5 et 13 mm. L'action de la deuxième frette sur la première frette est alors optimale en cas d'augmentation de la température.

Par ailleurs, la deuxième frette 44 est logée à l'intérieur de la chambre 62. Avantageusement, la deuxième frette 44 est ainsi protégée de l'extérieur. La jupe périphérique 40 agit ainsi comme bouclier de protection de la deuxième frette 44, mais aussi de la première frette 42.

Le bord inférieur 64 de la deuxième frette 44 est sensiblement coplanaire avec le bord inférieur 38 du tube céramique 22 et le bord inférieur 52 de la première frette 42. Cette configuration s'est en effet avérée optimale pour limiter le risque de cassure du tube céramique lors du montage de la deuxième frette.

Le bord supérieur 65 de la deuxième frette 26 est biseauté vers l'intérieur et vers l'extérieur.

La réalisation d'un dispositif de liaison tel que celui représenté sur la figure 3 peut s'effectuer de la manière suivante :
La partie inférieure du tube céramique 22 est d'abord recouverte du revêtement 32 isolant. L'adhésion d'un revêtement en oxyde céramique sur un tube en un matériau non-oxyde est cependant difficile, en particulier lorsque le matériau non-oxyde n'est pas ou peu poreux. En particulier, les techniques conventionnelles de projection directe de particules très fines dudit oxyde céramique au moyen d'une torche plasma se sont révélées inefficaces en cas de projection sur une première pièce en céramique non-oxyde.

Les inventeurs ont cependant découvert plusieurs nouveaux procédés pour revêtir un substrat à base d'un composé de silicium au moyen d'un revêtement comportant au moins un oxyde céramique. En particulier, ils ont découvert un procédé pour revêtir un substrat à base d'un composé de silicium au moyen d'un revêtement comportant au moins un oxyde céramique, comportant les étapes successives suivantes :
a1) application sur ledit substrat, de préférence à température ambiante, de particules comportant, de préférence constituées par, ledit au moins un oxyde céramique ;
b1) traitement thermique dudit substrat dans des conditions adaptées pour faire réagir ledit au moins un oxyde céramique avec du silicium du substrat de manière à former de la silice.

De préférence, les particules dudit au moins un oxyde céramique sont appliquées directement sur le substrat, sans couche intermédiaire. En particulier, aucune couche intermédiaire de silicium ou de silice n'est disposée sur le substrat avant l'étape a1. L'épaisseur de la couche de transition formée lors de l'étape b1) est alors avantageusement très faible, typiquement inférieure à 10 µm, voire inférieure à 8 µm ou même inférieure à 6 µm

Dans un mode de réalisation préféré, un procédé selon l'invention ne comporte pas une étape permettant de former de la silice avant l'étape a1).

A l'étape a1), toutes les techniques conventionnelles peuvent être utilisées pour appliquer les particules. En particulier, on peut appliquer les particules dudit oxyde céramique par pulvérisation, peinture ou trempage. A cet effet on prépare une barbotine que l'on applique sur le substrat. La barbotine comporte classiquement un solvant, de préférence de l'eau, un dispersant organique, et lesdites particules.

De préférence, la barbotine ne comporte pas de silice, de préférence ne comporte pas de composé de silicium. Après cuisson, la silice ne sera donc présente que dans la couche de transition, un revêtement dépourvu de silice étant exposé à l'extérieur. L'absence de silice peut modifier la perméabilité du revêtement, mais, dans le mode de réalisation représenté, cette modification est sans effet pratique, le revêtement étant lui-même recouvert d'une couche en matériau compliant et/ou d'une première frette. En outre, le procédé de fabrication en est simplifié.

L'application peut se faire à température ambiante, par exemple à l'air libre. La quantité de particules est adaptée en fonction de l'épaisseur de revêtement souhaitée.

De préférence encore, le procédé ne comporte aucune étape entre les étapes a1) et b1).

A l'étape b1), le substrat est de préférence soumis à une cuisson à une température comprise entre 1000°C et 1400°C, de préférence pendant une durée supérieure à 1 heure, par exemple sous air.

De manière surprenante, le traitement thermique conduit à la formation, dans le substrat, d'une couche de transition dans laquelle une partie du composé de silicium a réagi pour former une couche de silice au sein du matériau du substrat. Sans pouvoir l'expliquer théoriquement, les inventeurs ont constaté que la couche de silice améliore considérablement la qualité de l'adhésion de l'oxyde céramique.

Dans un mode de réalisation préféré, un procédé selon l'invention ne comporte que les étapes a1) et b1). La silice de la couche de transition résulte ainsi exclusivement de l'exécution de l'étape b1).Le procédé est alors particulièrement facile à mettre en oeuvre.

Les inventeurs ont également développé des variantes de ce procédé.

En particulier, ils ont découvert un procédé pour revêtir un substrat à base d'un composé de silicium au moyen d'un revêtement comportant au moins un oxyde céramique, ce procédé comportant les étapes successives suivantes :
a2) oxydation, au moins en surface dudit substrat, dudit composé de silicium, par exemple par un traitement thermique sous atmosphère oxydante, de manière à former de la silice,
b2) application sur ledit substrat, de préférence à température ambiante, de particules comportant, de préférence constituées par, ledit au moins un oxyde céramique ;
c2) traitement thermique dudit substrat dans des conditions adaptées pour faire réagir ledit au moins un oxyde céramique avec ladite silice.

A l'étape a2), le traitement thermique d'oxydation peut être par exemple réalisé en chauffant la surface du substrat à une température de 1250°C pendant 3 heures, par exemple sous air, par exemple à pression atmosphérique.

Dans un mode de réalisation, seule une partie du substrat, en particulier seule sa surface, ou seule la portion de sa surface destinée à recevoir le revêtement, est chauffée. Par exemple, dans le cas d'un tube céramique, il n'est pas toujours nécessaire d'introduire tout le tube dans le four.

De préférence, seule une couche superficielle du substrat est oxydée. De préférence encore, le substrat n'est oxydé que sur une profondeur inférieure à 20 µm.

A l'étape b2), on peut appliquer les particules dudit au moins un oxyde céramique comme à l'étape a1).

A l'étape c2), le substrat est de préférence soumis à une cuisson à une température comprise entre 1000°C et 1400°C, de préférence pendant une durée supérieure à 1 heure, par exemple sous air.

Les inventeurs ont également inventé un procédé pour revêtir un substrat à base d'un composé de silicium au moyen d'un revêtement comportant au moins un oxyde céramique, ce procédé comportant les étapes successives suivantes :
a3) dépôt d'une couche de silicium en surface du substrat, de préférence par projection plasma ;
b3) application sur ladite couche de silicium, de préférence à température ambiante, de particules comportant, de préférence constituées par, ledit au moins un oxyde céramique ;
c3) optionnellement, traitement thermique dudit substrat pour faire réagir ledit au moins un oxyde céramique avec du silicium du substrat de manière à former de la silice.

A l'étape a3), une torche plasma conventionnelle peut être mise en oeuvre.

A l'étape b3), on peut appliquer les particules dudit au moins un oxyde céramique comme à l'étape a1).

L'étape c3) peut être réalisée comme l'étape b1). Cependant, dans ce procédé, avantageusement, aucun traitement thermique n'est nécessaire si, à l'étape b3) l'application des particules est effectuée par projection thermique. Le procédé en est avantageusement simplifié.

Il est possible de faire adhérer le revêtement 32 de zircone sur le substrat formé par la partie inférieure du tube céramique 22, en suivant un des trois procédés qui viennent d'être décrits.

Avant de mettre en place la première frette 42 sur la première pièce, une couche de précurseur de matériau compliant est appliquée sur la surface extérieure de la partie inférieure 20 du tube céramique 22 et/ou sur la surface intérieure (destinée à venir en contact avec la partie inférieure 20) de la première frette 42.

Le précurseur de matériau compliant peut être préparé sous forme d'une suspension en solvant organique. Cette suspension est alors appliquée, par exemple par pulvérisation, peinture ou trempage. Puis le solvant est éliminé, par exemple par séchage.

La granulométrie de la poudre de la suspension, la quantité et la nature du solvant sont adaptées en fonction de la nature des surfaces et de l'épaisseur de matériau compliant désirées.

Le montage de la première frette 42 sur la partie inférieure 20 du tube céramique 22 s'opère ensuite, de préférence en dilatant la première frette par chauffage, puis en l'introduisant axialement, par son extrémité axiale pourvue de la collerette 48, sur le tube céramique 22.

De préférence, la première frette est montée « affleurante » sur la partie inférieure 20 du tube céramique 22. Autrement dit, elle est immobilisée dans une position dans laquelle son bord inférieur 52 est aligné, dans un même plan transversal, avec le bord inférieur 38 du tube céramique. Les inventeurs ont constaté que cet agencement limite avantageusement le risque de rupture du tube céramique.

Comme expliqué ci-dessus, le carbure de silicium est très conducteur thermiquement et tout contact entre la première frette 42 et le tube céramique 22 entraînerait, en l'absence de revêtement 32, une contraction brutale de la première frette menant à son blocage axial avant qu'elle ait pu atteindre la position définitive souhaitée.

La présence du revêtement 32 limite les échanges thermiques entre la première frette 42 et le tube céramique 22, notamment en cas de contact. Lors de l'introduction de la première frette 42 sur le tube céramique 22, le revêtement isolant forme en effet, avantageusement, une barrière thermique limitant les transferts de chaleur entre la première frette 42 à haute température et le tube céramique 22 conducteur thermiquement.

On appelle «jeu » J la différence entre le diamètre intérieur de la première frette 42 et le diamètre extérieur du tube céramique 22. Au moment de l'introduction de la première frette 42 sur le tube céramique 22, le jeu J est positif et autorise le montage par emmanchement de la première frette sur le tube céramique 22. Grâce à la présence du revêtement, le jeu J peut être avantageusement considérablement réduit et/ou la température de la première frette diminuée, sans risque de blocage axial inopportun.

Le retour à la température ambiante conduit à une contraction de la première frette plus forte que celle du tube céramique, ce qui aboutit à une annulation du jeu J puis à une pression de la première frette sur le tube céramique 22 (figure 4). Avantageusement, cette compression contribue également à l'efficacité du matériau compliant. Avant de mettre en place la deuxième frette 44 sur la première frette 42, une couche de précurseur de matériau compliant est également appliquée sur la surface extérieure de la première frette 42 et/ou sur la surface intérieure de la deuxième frette 44, au moins sur les zones de ces surfaces destinées à être en contact après frettage.

La deuxième frette 44 peut alors être montée sur la première frette 42, par un frettage conventionnel (figure 5). La forme biseautée vers l'intérieur du bord supérieur 65 de la deuxième frette 44 facilite l'emmanchement sur la première frette.

Comme pour le montage de la première frette sur le tube céramique 22, un revêtement formant barrière thermique peut être également appliqué sur la surface extérieure de la première frette afin de limiter le jeu nécessaire lors de l'opération de frettage. De préférence, la deuxième frette est montée « affleurante » sur la première frette. Autrement dit, elle est immobilisée dans une position dans laquelle son bord inférieur 64 est aligné, dans un même plan transversal P₁, avec le bord inférieur 52 de la première frette. Les inventeurs ont constaté que cette position limite avantageusement le risque de rupture du tube céramique.

La forme biseautée vers l'extérieur du bord supérieur 65 de la deuxième frette 44 limite également, avantageusement, les contraintes appliquées sur le tube céramique 22.

Le tube céramique 22 est ensuite rapproché coaxialement du tube métallique 26 jusqu'à buter sur la surface annulaire 36. La première frette 42 et la deuxième frette 44 étant montées affleurantes au bord inférieur 38 du tube céramique 22, il est également possible que l'appui sur la surface annulaire 36 soit réalisé par l'intermédiaire du bord inférieur 52 de la première frette 42 et/ou du bord inférieur 64 de la deuxième frette.

Dans cette position de butée, telle que représentée sur la figure 6, le bord supérieur 58 de la jupe périphérique 40 est en regard du bord supérieur 56 de la collerette 48. Ces bords sont alors unifiés par soudure ou brasage.

La réalisation du cordon de soudure 60 implique classiquement des températures d'environ 1500°C. Avantageusement, la zone de jonction (cordon de soudure 60) entre le bord supérieur 56 de la collerette 48 et le bord supérieur 58 de la jupe périphérique 40 est à distance de la surface extérieure 61 du tube céramique 22. Avantageusement, le risque d'un choc thermique susceptible de casser le tube céramique en est limité.

Dans cette position, la première frette 42 et le tube métallique 26 délimitent la chambre 62. La deuxième frette est disposée dans la chambre 62. Avantageusement, elle est ainsi protégée des agressions, notamment physiques.

De préférence, le cordon de soudure 60 est sensiblement continu, de sorte que la chambre 62 est étanche, protégeant ainsi également la deuxième frette des agressions chimiques.

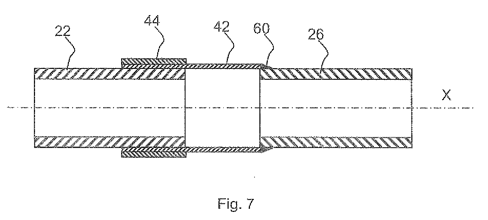

Le tube céramique 22 est alors fixé, de manière fiable, au tube métallique 26. La figure 7 représente un dispositif selon la demande selon une variante dans laquelle la première frette 42 présente la forme d'un manchon qui fait saillie au-delà de l'extrémité axiale du tube céramique 22. Le tube métallique est fixé à l'extrémité libre de la première frette 42 au moyen d'un cordon de soudure 60, à distance du tube céramique. La deuxième frette 44 est montée affleurante sur le tube céramique 22.

Des variantes du mode de réalisation représenté sur la figure 7 sont possibles. Par exemple, le tube métallique 26 peut être soudé bout à bout de la première frette 42, les chants de la première frette et du tube métallique étant en contact. Le diamètre intérieur et/ou le diamètre extérieur de la première frette 42 peuvent être constants ou variables le long de l'axe X. Le tube métallique 26 peut être également fixé à la surface extérieure de la première frette 42.

Des essais ont été effectués avec un dispositif de liaison du type de celui représenté sur la figure 3. Si on désigne par
- DE : le diamètre extérieur de l'ensemble formé par le tube céramique 22, le revêtement 32 et la couche 50 en matériau compliant,
- DE₄₂ : le diamètre extérieur de la première frette 42,
- DI₄₂ : le diamètre intérieur de la première frette 42,
- DI₄₂ : le diamètre intérieur de la deuxième frette 44,
- Δ₁ : le rapport 100*(DE-DI₄₂)/DE, et
- Δ₂ : le rapport 100*(DE₄₂-DI₄₄)/DE₄₂.
toutes les mesures étant effectuées à 20°C,
les combinaisons des valeurs suivantes de Δ₁ et Δ₂ ont conduit à des montages particulièrement fiables :

**Tableau 1**

| Exemple | e₄₂ | e₄₄ | Δ₁ | Δ₂ |
|---|---|---|---|---|
| 1 | 2 | 10 | 0,20 | 0,20 |
| 2 | 2 | 12 | 0,10 | 0,20 |
| 3 | 2 | 10 | 0,20 | 0,10 |
| 4 | 2 | 10 | 0,10 | 0,10 |
| 5 | 3 | 10 | 0,10 | 0,15 |
| 6 | 4 | 10 | 0,10 | 0,10 |
| 7 | 4 | 10 | 0,05 | 0,00 |

Des essais ont encore été effectués, avec le dispositif de l'exemple 6, pour mesurer l'intérêt d'un revêtement 32 à la surface du tube céramique et d'une couche 50 en matériau compliant interposé entre le revêtement 32 et la première frette 42.

Le matériau compliant était en un alliage Ag/Pd. Le tableau 2 suivant résume les résultats obtenus :

**Tableau 2**

| Exemple 6 | Résultats au cyclage thermique à 900°C |
|---|---|
| sans revêtement 32 ni couche 50 | Casse au deuxième cycle |
| avec revêtement 32 de zircone et couche 50 | Pas de casse après 5 cycles et étanchéité conservée |
| avec revêtement 32 d'alumine- zircone et couche 50 | |

Ces résultats montrent que le revêtement 32 et la couche 50 ont non seulement un effet sur l'étanchéité, mais aussi sur la résistance au cyclage thermique.

Bien entendu, l'invention n'est pas limitée à un mode de réalisation décrit et représenté.

En particulier, un frettage n'impose pas que la pièce frettée présente, dans une coupe transversale, un contour extérieur circulaire. Dans un mode de réalisation, la première pièce et/ou la première frette ne présente(nt) pas un contour circulaire. Avantageusement, toute rotation de la première frette et/ou de la deuxième frette, respectivement, autour de l'axe de la première frette et/ou de la deuxième frette, respectivement, est alors empêchée. La première pièce et/ou la première frette peuvent notamment présenter, en coupe transversale, un contour oblong, ou un contour présentant une pluralité de pointes, de préférence équiangulairement réparties autour de l'axe, par exemple une forme en étoile.

## Revendications

1. Dispositif comportant une première pièce (22) frettée au moyen d'une première frette (42), la première frette étant elle-même frettée au moyen d'une deuxième frette (44) présentant un coefficient de dilatation inférieur au coefficient de dilatation de la première frette, une frette étant une pièce externe frettée sur une pièce interne.

2. Dispositif selon la revendication précédente, dans lequel la première pièce est en un matériau présentant un coefficient de dilatation inférieur à 10 x 10⁻⁶ K⁻¹ entre 20°C et 1000°C, et/ou présentant un module d'élasticité supérieur à 150 GPa, et/ou présentant une porosité totale inférieure à 5%.

3. Dispositif selon l'une quelconque des revendications précédentes, dans lequel la première pièce comporte un matériau céramique ou vitrocéramique.

4. Dispositif selon la revendication précédente, dans lequel la quantité massique de carbure de silicium dans le matériau de la première pièce est supérieure à 80%.

5. Dispositif selon l'une quelconque des revendications précédentes, dans lequel la première frette est en un matériau présentant un coefficient de dilatation inférieur à 25.10⁻⁶ K⁻¹ et supérieur à 10.10⁻⁶ K⁻¹ entre 20°C et 1000°C, et/ou le rapport entre le coefficient de dilatation du matériau de la première frette et le coefficient de dilatation du matériau du matériau de la première pièce, à une température entre 20°C et 1000°C, est supérieur à 2,5.

6. Dispositif selon l'une quelconque des revendications précédentes, dans lequel la deuxième frette est en un matériau présentant un coefficient de dilatation supérieur à 4.10⁻⁶ K⁻¹ entre 20°C et 1000°C, le rapport entre le coefficient de dilatation du matériau de la première frette et le coefficient de dilatation du matériau de la deuxième frette étant supérieur à 1,2 entre 20°C et 1000°C.

7. Dispositif selon l'une quelconque des revendications précédentes, dans lequel le matériau de la deuxième frette présente une teneur massique en niobium supérieure à 80%, et/ou une teneur massique en hafnium supérieure à 5%, et/ou une teneur massique en titane supérieure à 0,5%.

8. Dispositif selon l'une quelconque des revendications précédentes, dans lequel la première frette présente une épaisseur supérieure à 1 mm et inférieure à 5 mm, et/ou la deuxième frette présente une épaisseur supérieure à 3 mm et inférieure à 15 mm, et/ou la première frette et/ou la deuxième frette s'étend sur une longueur supérieure à 40 mm et inférieure à 150 mm.

9. Dispositif selon l'une quelconque des revendications précédentes, dans lequel une deuxième pièce (26) présentant un coefficient de dilatation supérieur à 10 x 10⁻⁶ K⁻¹ est fixée sur la première frette, la région de jonction entre la première frette et la deuxième pièce étant en tout point écartée d'au moins 1 mm de ladite première pièce.

10. Dispositif selon l'une quelconque des revendications précédentes, dans lequel la première pièce est un tube céramique et, le cas échéant, la deuxième pièce est un tube métallique.

11. Dispositif selon l'une quelconque des revendications précédentes, dans lequel un revêtement en (32) un matériau de revêtement comportant au moins un oxyde céramique définit au moins une partie de la zone de contact entre la première frette et la première pièce, le rapport entre la conductivité thermique du matériau de la première pièce (22) et la conductivité thermique du matériau de revêtement étant supérieur à 10.

12. Dispositif selon la revendication immédiatement précédente, dans lequel une couche de transition comportant de la silice s'étend entre la première pièce et le revêtement.

13. Dispositif selon l'une quelconque des revendications précédentes, dans lequel un bord (38) à une extrémité axiale de la partie cylindrique de ladite première pièce sur laquelle la première frette a été montée, un bord (52) d'une extrémité axiale de la première frette et un bord (64) d'une extrémité axiale de la deuxième frette appartiennent à un même plan transversal (P₁).

14. Dispositif selon l'une quelconque des revendications précédentes, dans lequel la deuxième pièce est soudée sur une collerette (48) de la première frette et conformée de manière à définir, en coopération avec la première frette, une chambre (62) dans laquelle la deuxième frette est logée.

15. Dispositif selon l'une quelconque des revendications précédentes, dans lequel une couche (50) d'un matériau compliant constitué par un alliage comportant de l'argent et/ou de l'or et au moins 0,5% de palladium s'étend entre la première frette et la deuxième frette et/ou entre la première pièce et la première frette.

16. Appareil choisi parmi un four, une chaudière, un surchauffeur, un générateur de vapeur, un réacteur chimique et un échangeur thermique, en particulier dans une unité de vapocraquage, ou dans une unité de valorisation des déchets, en particulier un incinérateur d'ordures ménagères, ledit appareil comportant au moins un tube en carbure de silicium fixé par au moins une de ses extrémités à un tube métallique, le tube en carbure de silicium et le tube métallique constituant respectivement une première pièce et une deuxième pièce d'un dispositif conforme à l'une quelconque des revendications précédentes.

## Patentansprüche

1. Vorrichtung bestehend aus einem ersten Stück (22), das mittels eines ersten Schrumpfringes (42) umschlossen ist, wobei der erste Schrumpfring selbst mittels eines zweiten Schrumpfrings (44) umschlossen ist, der einen Ausdehnungs-Koeffizienten aufweist, der kleiner ist als der Ausdehnungs-Koeffizient des ersten Schrumpfrings, wobei ein Schrumpfring ein äußeres Teil ist, das auf ein inneres Teil aufgeschrumpft ist.

2. Vorrichtung nach dem vorhergehenden Anspruch, in der das erste Teil aus einem Material ist, welches einen Ausdehnungs-Koeffizienten aufweist, der kleiner als 10 x 10⁻⁶ K⁻¹ zwischen 20 °C und 1000°C aufweist, und/oder einen Elastizitätsmodul, der größer als 150 GPa, und/oder eine Gesamtporosität, die kleiner als 5% ist.

3. Vorrichtung nach einem der vorhergehenden Ansprüche, in welcher das erste Teil ein keramisches oder vitrokeramisches Material aufweist.

4. Vorrichtung nach dem vorhergehenden Anspruch, in welcher der Massenanteil an Siliciumcarbid in dem Material des ersten Teils höher als 80% ist.

5. Vorrichtung nach einem der vorhergehenden Ansprüche, in welcher der erste Schrumpfring aus einem Material besteht, welches einen Ausdehnungs-Koeffizienten aufweist, der kleiner als 25 x 10⁻⁶ K⁻¹ und größer als 10 x 10⁻⁶ K⁻¹zwischen 20°C und 1000°C ist, und/oder das Verhältnis zwischen dem Ausdehnungs-Koeffizienten des Materials des ersten Schrumpfrings und der Ausdehnungs-Koeffizient des Materials des ersten Teils bei einer Temperatur zwischen 20°C und 1000°C größer als 2,5 ist.

6. Vorrichtung nach einem der vorhergehenden Ansprüche, in welcher der zweite Schrumpfring aus einem Material besteht, welches einen Ausdehnungs-Koeffizienten aufweist, der größer als 4 x 10⁻⁶ K⁻¹ zwischen 20°C und 1000°C ist, wobei das Verhältnis zwischen dem Ausdehnungs-Koeffizienten des Materials des ersten Schrumpfrings und dem Ausdehnungs- Koeffizienten des Materials des zweiten Schrumpfrings größer als 1,2 zwischen 20°C und 1000°C ist.

7. Vorrichtung nach einem der vorhergehenden Ansprüche, in welcher das Material des zweiten Schrumpfrings einen Massenanteil an Niob aufweist, der größer als 80% ist und/oder einen Massenanteil an Hafnium, welcher größer als 5% ist, und/oder einen Massenanteil an Titan, der größer als 0,5% ist.

8. Vorrichtung nach einem der vorhergehenden Ansprüche, in welcher der erste Schrumpfring eine Dicke aufweist, die größer als 1 mm und kleiner als 5 mm ist und/oder der zweite Schrumpfring eine Dicke aufweist, die größer als 3 mm und kleiner als 15 mm ist, und/oder der erste Schrumpfring und/oder der zweite Schrumpfring sich über eine Länge erstreckt, die größer als 40 mm und kleiner als 150 mm ist.

9. Vorrichtung nach einem der vorhergehenden Ansprüche, in welcher ein zweites Teil (26), welches einen Ausdehnungs-Koeffizienten von größer als 10 x 10⁻⁶ K⁻¹ aufweist, auf dem ersten Schrumpfring befestigt ist, wobei der Verbindungsbereich zwischen dem ersten Schrumpfring und dem zweiten Teil an jedem Punkt mindestens 1 mm vom ersten Teil beabstandet ist.

10. Vorrichtung nach einem der vorhergehenden Ansprüche, in welcher das erste Teil ein keramisches Rohr und gegebenenfalls das zweite Teil ein metallisches Rohr ist.

11. Vorrichtung nach einem der vorhergehenden Ansprüche, in welcher eine Verkleidung (32) aus einem Verkleidungsmaterial, welches wenigstens ein keramisches Oxid aufweist, wenigstens einen Teil der Kontaktzone zwischen dem ersten Schrumpfring und dem ersten Teil definiert, wobei das Verhältnis zwischen der Wärmeleitfähigkeit des Materials des ersten Teils (22) und die Wärmeleitfähigkeit des Materials der Verkleidung größer als 10 ist.

12. Vorrichtung nach dem vorhergehenden Anspruch, in welcher eine aus dem Siliciumoxid bestehende Übergangsschicht sich zwischen dem ersten Teil und der Verkleidung erstreckt.

13. Vorrichtung nach einem der vorhergehenden Ansprüche, in welcher ein Rand 38 an einem axialen Ende des zylindrischen Teils des ersten Teils, auf dem der erste Schrumpfring montiert ist, ein Rand (52) eines axialen Endes des ersten Schrumpfrings und ein Rand (64) eines axialen Endes des zweiten Schrumpfrings auf einer gemeinsamen transversalen Ebene (P₁) liegen.

14. Vorrichtung nach einem der vorhergehenden Ansprüche, in welcher das zweite Teil auf einen Kragen (48) des ersten Schrumpfrings aufgeschweißt ist und so angepasst ist, dass in Kooperation mit dem ersten Schrumpfring eine Kammer (62) definiert ist, in welcher der zweite Schrumpfring aufgenommen ist.

15. Vorrichtung nach einem der vorhergehenden Ansprüche, in welcher eine Schicht (50) eines geeigneten Materials, welches durch eine Legierung gebildet ist, die Silber und/oder Gold und wenigstens 0.5% Palladium enthält, sich zwischen dem ersten Schrumpfring und dem zweiten Schrumpfring und/oder zwischen dem ersten Teil und dem ersten Schrumpfring erstreckt.

16. Apparat ausgewählt aus einem Ofen, einem Kessel, einem Überhitzer, einem Dampfgenerator, einem chemischen Reaktor und einem Wärmetauscher, insbesondere in einer Dampfcracking-Einheit, oder in einer Einheit zur Abfallaufbereitung, insbesondere ein Verbrennungsofen für Müll, wobei der Apparat aus wenigstens einem Rohr aus Siliciumcarbid besteht, welches mit mindestens einem seiner Enden an einem metallischen Rohr befestigt ist, wobei das Rohr aus Siliciumcarbid und das metallische Rohr jeweils ein erstens Teil und ein zweites Teil einer Vorrichtung bilden, die mit einem der vorhergehenden Ansprüche konform ist.

## Claims

1. A device comprising a first part (22) shrink-fitted by means of a first shrink ring (42), the first being itself shrink-fitted by means of a second shrink ring (44) exhibiting a lower thermal expansion coefficient than the thermal expansion coefficient of the first shrink ring, a shrink ring being an external part shrink fitted to an internal part.

2. The device according to the preceding claim, in which the first part is made of a material exhibiting a thermal expansion coefficient of less than 10.10⁻⁶ K⁻¹ between 20°C and 1000°C, and/or exhibiting a modulus of elasticity of greater than 150 GPa, and/or exhibiting a total porosity of less than 5%.

3. The device according to any of the preceding claims, in which the first part comprises a ceramic or vitroceramic material.

4. The device according to the preceding claim, in which the amount by weight of silicon carbide in the material of the first part is greater than 80%.

5. The device according to any of the preceding claims, in which the first shrink ring is made of a material exhibiting a thermal expansion coefficient of less than 25.10⁻⁶ K⁻¹ and greater than 10.10⁻⁶ K⁻¹, between 20°C and 1000°C, and/or the ratio of the thermal expansion coefficient of the material of the first shrink ring to the thermal expansion coefficient of the material of the first part, at a temperature between 20°C and 1000°C, is greater than 2.5.

6. The device according to any of the preceding claims, in which the second shrink ring is made of a material exhibiting a thermal expansion coefficient of greater than 4.10⁻⁶ K⁻¹, between 20°C and 1000°C, the ratio of the thermal expansion coefficient of the material of the first shrink ring to the thermal expansion coefficient of the material of the second shrink ring is greater than 1.2, between 20°C and 1000°C.

7. The device according to any of the preceding claims, in which the material of the second shrink ring exhibits a content by weight of niobium of greater than 80%, and/or a content by weight of hafnium of greater than 5%, and/or a content by weight of titanium of greater than 0.5%.

8. The device according to any of the preceding claims, in which the first shrink ring exhibits a thickness of greater than 1 mm and of less than 5 mm and/or the second shrink ring exhibits a thickness of greater than 3 mm and of less than 15 mm, and/or the first shrink ring and/or the second shrink ring extends over a length of greater than 40 mm and of less than 150 mm.

9. The device according to any of the preceding claims, in which a second part (26) exhibiting a thermal expansion coefficient of greater than 10·10⁻⁶ K⁻¹ is attached to the first shrink ring, the region of junction between the first shrink ring and the second shrink ring being at any point separated by at least 1 mm from said part.

10. The device according to any of the preceding claims, in which the first part is a ceramic tube and, if appropriate, the second part is a metal tube.

11. The device according to any of the preceding claims, in which a coating (32) made of a coating material comprising at least one ceramic oxide defines at least a portion of the region of contact between the first shrink ring and the first part, the ratio of the thermal conductivity of the material of the first part (22) to the thermal conductivity of the coating material is greater than 10.

12. The device according to any of the three immediately preceding claims, in which a transition layer comprising silica extends between the first part and the coating.

13. The device according to any of the preceding claims, in which an edge (38) at an axial end of the cylindrical portion of said first part to which the first shrink ring has been fitted, an edge (52) of an axial end of the first shrink ring and an edge (64) of an axial end of the second shrink ring belong to one and the same transverse plane (P₁).

14. The device according to any of the preceding claims, in which the second part is welded to a flange (48) of the first shrink ring and shaped so as to define, in interaction with the first shrink ring, a chamber (62) in which the second shrink ring is housed.

15. The device according to any of the preceding claims, in which a layer (50) of a compliant material composed of an alloy comprising silver and/or gold and at least 0.5% of palladium extends between the first shrink ring and the second shrink ring and/or between the first part and the first shrink ring.

16. An item of equipment chosen from a furnace, a boiler, a superheater, a steam generator, a chemical reactor and a heat exchanger, in particular in a steam cracking unit or in a unit for the recovery of waste, in particular a household garbage incinerator, said item comprising at least one tube made of silicon carbide attached by at least one of its ends to a metal tube, the tube made of silicon carbide and the metal tube respectively constituting a first part and a second part of a device according to any one of the preceding claims.
